# EUROPEAN PATENT APPLICATION

(11) **EP 4 776 590 A1**
(43) Date of publication of application: **15.07.2026**
(21) Application number: 25225797.7
(22) Date of filing: 19.12.2025
(51) Int. Cl.: H04L 43/0811, H04L 43/0864, H04L 43/106, H04L 43/20

(54) **PROXY PINGS IN VIRTUAL NETWORKS**

(30) Priority: 09.01.2025 US 202519015185
(71) Applicant: Microsoft Technology Licensing, LLC, Redmond, WA 98052-6399 (US)
(72) Inventor: Nguyen, Vincent Vu Phan, Redmond, WA, 98052 (US); Srinivasan, Harish, Redmond, WA, 98052 (US); Dasgupta, Milan, Redmond, WA, 98052 (US); Verma, Anshuman, Redmond, WA, 98052 (US)
(74) Representative: Grünecker Patent- und Rechtsanwälte PartG mbB

(57) **Abstract**

Examples solutions for evaluating network connectivity between computing resources within a computing environment include: generating a network packet for a proxy ping at a first host server that provides a first virtual machine (VM), the network packet being originally generated by the first host server and not generated by the first VM, the network packet being created to include a proxy ping flag within a header of the network packet; capturing a sending timestamp; receiving a response network packet generated by a second host server in response to interception of the network packet without the network packet being sent through to the second VM, the network packet having been identified for interception by the second host server based on identifying the proxy ping flag within the header of the network packet; capturing a response timestamp; and computing a latency value based on a difference between the sending and response timestamps.

## Description

### BACKGROUND

In cloud computing environments, a virtual network supporting communication between virtual machines (VMs) can be subject to compliance with several policies defined by its provider and the customer. For example, a customer may implement a security system that allows connection to specific servers to protect their data. These computing environments typically provide a software defined network (SDN) that separates the virtual network into a control plane, which manages the logic for how data packets flow through the network, and a data plane, which is responsible for packet forwarding according to instructions received from the control plane. SDN rules are implemented on the virtual network, allowing administrators to configure the virtual network to, for example, allow or deny traffic based on IP addresses, protocols, or ports, apply firewall policies, segment into smaller networks, detect and block suspicious traffic, and the like.

### SUMMARY

The disclosed examples are described in detail below with reference to the accompanying drawing figures listed below. The following summary is provided to illustrate some examples disclosed herein. The following is not meant, however, to limit all examples to any particular configuration or sequence of operations. Example solutions for evaluating network connectivity between computing resources within a computing environment include: generating a network packet for a proxy ping at a first computing resource hosting a first virtual computing resource, the network packet being originally created by the first computing resource and not created by the first virtual computing resource, the network packet being created to include a proxy ping flag within a header of the network packet, the network packet identifying the first virtual computing resource as a source for the network packet and a second virtual computing resource as a destination for the network packet; capturing a sending timestamp indicating a time of a sending of the network packet; receiving a response network packet from a second computing resource that hosts the second virtual computing resource, the response network packet being generated by the second computing resource in response to receipt and interception of the network packet without the network packet being sent to the second virtual computing resource, the network packet having been identified for interception by the second computing resource based on identifying the proxy ping flag within the header of the network packet; capturing a response timestamp indicating a time of the receiving of the response network packet; and computing a latency value based on a difference between the sending timestamp and the response timestamp.

Example solutions for applying rules to network packets within a software defined network include: a first network acceleration component comprising a generic flow table (GFT) module and a rule offload engine (ROE) module, the GFT module being configured to pass a first network packet to the ROE module upon determination that the first network packet does not match an active flow in a flow-based hardware acceleration process performed by the GFT module, the ROE module being configured to determine that the first network packet is not dispositively allowed or denied upon applying a first set of rules of the software defined network to the first network packet; and a second network acceleration component configured to: receive a deferral for the first network packet based on the determination by the ROE module; apply a second set of rules of the software defined network to the first network packet; and transmit an allowance command to the GFT module for the first network packet, thereby causing the GFT module to transmit the first network packet within the software defined network.

### BRIEF DESCRIPTION OF THE DRAWINGS

The disclosed examples are described in detail below with reference to the accompanying drawing figures listed below:
FIG. 1 illustrates an example architecture of a connectivity management (CM) system operating within a cloud computing infrastructure;
FIG. 2 is an architecture diagram of a host server (such as in FIG. 1) that includes hardware components that facilitate proxy pings as well as enable hardware aspects of hardware acceleration for application of software defined network (SDN) rules within the host servers;
FIG. 3 illustrates a portion of a packet processing pipeline for processing a packet via the virtual networking platform (VNP) of a CM system;
FIG. 4 is a flowchart illustrating example operations for processing an original proxy ping packet and/or a generic packet during egress;
FIG. 5 is a flowchart illustrating example operations for processing the example original proxy ping packet and/or the generic packet during ingress at the target host server;
FIG. 6 is a flowchart illustrating example operations for processing the example proxy ping response packet during ingress back at the source host server;
FIG. 7 is a flowchart illustrating exemplary operations performed by the CM system of FIG. 1 for evaluating network connectivity between computing resources within a computing environment; and
FIG. 8 is a block diagram of an example computing device (e.g., a computer storage device) for implementing aspects disclosed herein.

Corresponding reference characters indicate corresponding parts throughout the drawings. Any of the drawings may be combined into a single example or embodiment.

### DETAILED DESCRIPTION

Processing networking packets within a software defined network (SDN) introduces variability in network latencies and may enforce incorrect policies because of misconfigured SDN rules. It is imperative for cloud providers and their clients to diagnose such problems. Some existing solutions test network traffic between client virtual machines (VMs) within a given virtual network to evaluate SDN rules and the connectivity they allow or deny (e.g., sending Internet control message protocol (ICMP)-based pings between VMs). However, cloud providers often do not have access to client VMs, and thus are limited in how they may perform such connectivity and rules testing. Some conventional systems, under an "agent model" of testing, rely upon installation of agents within the client VMs in order to facilitate VM-to-VM connectivity testing. This agent model thus adds computational overhead to the client VMs (e.g., where each client VM executes additional agent process(es), generates additional network traffic from the VM) as well as adds access requirements that may be undesirable, impractical, or even disallowed for certain clients (e.g., to install and administer the agent processes, to execute privileged operations sufficient to perform connectivity testing operations, and the like). Further, enforcing SDN policies can incur significant computational overhead on the VMs.

In examples as described herein, a cloud computing infrastructure provides virtual machines and various other resources and services such as containers, serverless computing, storage resources, virtual private networks, and the like. The cloud computing infrastructure supports several customers (e.g., "tenants"), each of which has their own virtual private cloud, a set of private resources (e.g., VMs, containers, and the like) upon which they execute applications and services to support their own particular needs. Each tenant's virtual private cloud includes their own virtual network that allows their private resources to communicate with each other, and perhaps with other networks such as the Internet or other private networks of the tenant (e.g., on-premise physical networks, other cloud networks). This virtual network and supporting hardware provided by the cloud computing infrastructure also provides SDN that allows the tenant (e.g., network administrators) to configure and deploy various security policies within the virtual network. These "SDN rules" or "SDN policies" limit how network traffic flows within the virtual network. As such, when improperly configured, these SDN rules may cause a loss of connectivity between resources within the virtual network, thereby potentially resulting in an impact to service availability, lost computing resources, network outages, and many other negative impacts.

In examples, the cloud computing infrastructure includes a connectivity management (CM) system that is configured to test connectivity between components of the various virtual networks within the cloud computing infrastructure (e.g., latency analysis between VMs or the like). The CM system includes a CM controller that is configured to orchestrate the monitoring and testing of connectivity between resources within each particular virtual network. Each host server (e.g., physical server device) that participates in the CM system includes a CM agent that works with the CM controller to initiate and respond to special connectivity testing packets. These special packets are referred to herein as "proxy ping packets" as they are generated on behalf of VMs or other virtual entities within a given virtual network.

More specifically, in examples, the CM agent operates as a component of a virtual networking platform (VNP) provided by the host server (e.g., operating on the host server, just below the VMs or other virtual resources, and within the flow of network packet processing for the VMs). During operation, the CM agent is instructed to test connectivity between a given VM (the "source VM", executing on this particular host server) and another VM (the "target VM", executing on this or perhaps another host server). As such, the CM agent generates a proxy ping packet using a source address of the source VM and a target address of the target VM and inserts this packet as an "outbound" packet (e.g., as if it had been generated by the source VM). Further, this proxy ping packet is created with a special flag (e.g., within a packet header) that identifies this packet as a proxy ping-type packet. When this packet is received by the other host server (e.g., on the way up toward the target VM), the virtual networking platform on the receiving host server is configured to identify this packet as a proxy ping packet (e.g., via the special flag in the header), allow the packet to be processed by the local SDN rules (as with all other packets destined for the target VM), but then intercept the packet just before it is passed up to the target VM. Instead of the target VM, the local virtual networking platform generates and transmits a response proxy ping packet, sending this response packet back to the source VM (and source host server). This response packet is likewise intercepted by the virtual networking platform back at the source host server just before passing the packet up to the source VM, thereby completing the proxy ping.

Because this proxy ping packet is inserted as an outbound packet originating from the source VM, the VNPs of the host server(s) naturally apply all of the SDN rules to this packet as they would for any other packets generated by the source VM (and destined for the target VM), as these proxy ping packets appear in the outbound packet stream just like packets originally generated by the VMs. In other words, this proxy ping packet will be successfully transmitted to the target VM, or perhaps get dropped, based on the SDN rules currently being enforced within that virtual network. Further, because the packets are generated external to the VMs and are intercepted before they are passed up to the VMs, this architecture effectively tests connectivity between two VMs without the direct involvement of either of the VMs. This allows the CM system to operate without the need of agents being installed within each of the VMs (e.g., to generate pings from within the VM).

In some examples, the CM system provides hardware acceleration within the host servers that helps reduce computational overhead on the virtual networking platform. Enforcing SDN rules within the virtual network can incur significant overheads on the central processors. To reduce this overhead, the CM system offloads some of the packet processing and SDN rule application operations of the virtual networking platform to a generic flow table ("GFT"), or "GFT offload engine," a specialized match-action hardware accelerator provided by a dedicated hardware component on the host server, thereby improving throughput, lowering latency, and reducing CPU utilization on the CPUs of a given host server.

More specifically, in examples, the packet processing and application of SDN rules within a given virtual network is performed by a combination of a software component (e.g., a portion of the VNP executing on the host server(s)) as well as several hardware components (e.g., the GFT executing on a SmartNIC, virtual switch technology integrated into a system-on-chip (SoC), and others). In examples, the GFT offload engine is implemented on a "Smart network interface card (NIC)" (or "SmartNIC") that includes a programmable hardware component (e.g., field-programmable gate arrays (FPGAs)). The GFT offload engine helps enhance performance by offloading complex network operations from the main CPUs of the host server (e.g., network operations such as routing, network address translation, and packet filtering). The GFT manages flow tables that enable packet matching and actions like decapsulation or address translation, even for encapsulated traffic across multiple network layers.

Further, in examples, the operations of the GFT are further enhanced by addition of a "rule offload engine" ("ROE"), which is also programmed into the FPGA on the SmartNIC. During operation, after a successful handshake, the VNP of a given host server offloads a unified flow ("UF") to the GFT, which processes any subsequent packets that belong to an offloaded connection. Such "GFT-offloads" accelerate data-path processing after connection establishment. However, the VNP processes new connection setups and the connection per second (CPS) performance is bound by the VNP. The ROE is included as hardware acceleration to process a subset of SDN rules and greatly improving connection setup performance. Further, in examples, the ROE also supports the same debugging and diagnosability features of the proxy pings by, for example, recognizing the proxy ping packets and allowing those packets to be subject to the SDN rules implemented by the ROE and perhaps be sent up to the VNP in some situations, thereby enabling the SDN rules to be enforced (and thus tested) at both the FPGA layer and above.

The example systems and methods described herein provide various technical improvements over conventional systems. Regarding connectivity management for evaluating network connectivity between computing resources within a computing environment, examples are able to reduce computational burden on virtual computing resources by providing a network protocol and associated operational steps that moves the generation of, and response to, ping-like traffic from virtual machines to the underlying computing resources that support the VM architecture of those VMs. In examples, when generating a proxy ping packet (e.g., to test connectivity between a source VM and a target VM, as well as associated SDN rules governing such communication), the system generates a packet external to the source VM (e.g., by the VNP that supports the source VM) and marks that packet as a proxy ping-type packet. This packet is sent to the target VM, but is intercepted by the target VNP that supports the target VM. The target VNP responds to the proxy ping packet, sending a response packet back to the source VNP. This packet is thus subjected to the same SDN rules as are other packets generated by the source VM, both by the source VNP and the target VNP. Such architecture and operations eliminate the need for agent installation and execution on the VMs themselves, as the proxy pings are generated, and responded to, outside of the VMs (e.g., without involvement of the VMs themselves). As such, computational efficiency of the VMs is improved by removing the need for agent installation and execution on the VMs themselves, as the proxy ping-type packets are generated and responded to by the supporting VNPs.

Further, examples also provide computational improvements in the processing of network packets by the VNPs, and particularly in enhanced the application of SDN rules to network packets for the virtual computing resources supported by the VNPs. In examples, the computing resources that support the virtual networks used by the VMs provide two tiers of hardware-accelerated rules application for the SDN rules applied to the virtual networks. A computing device includes two network acceleration components, namely a first network acceleration module that includes generic flow table (GFT) with a rule offload engine (ROE) configured to implement a subset of SDN rules, and a second acceleration module configured to implement the remainder of the SDN rules. During operation, the ROE is configured with a subset of SDN rules and is configured to apply that subset of SDN rules as a part of the GFT processing. Some packets pass the subset of SDN rules at the GFT and are allowed to be sent without being subjected to the remainder of the SDN rules (e.g., for those packets with pre-existing active flow in the GFT, and that pass the subset of SDN rules implemented by the ROE). Packets that do not pass the subset of SDN rules implemented by the ROE can be rejected without application of the remainder of the SDN rules. Packets that do not have an active flow and that do pass the subset of rules implemented by the ROE are deferred to the other hardware acceleration component for application of the remainder of the SDN rules. As such, the addition of the ROE as an additional hardware acceleration component implementing only a subset of the SDN rules thus provides additional computational acceleration and computational efficiency by only applying some of the SDN rules to some network packets, thus increasing the speed at which the computational resource can respond and send network packets.

It should be noted that typical TCP/IP connections are normally established between two hosts with a SYN/SYN-ACK/ACK three-step handshake (e.g., between the source and target VMs). However, even though the proxy ping is a TCP/IP packet, since these packets are not generated by the source VM (e.g., because they are generated below the VM, by the VNP) nor responded to by the target VMs (e.g., because they are intercepted before getting to the target VM), no such three-step handshake is performed in response to these proxy ping packets, and no ongoing TCP connection is opened. As such, aspects of the disclosure differ from typical TCP/IP connection establishment.

The various examples are described in detail with reference to the accompanying drawings. Wherever preferable, the same reference number is used throughout the drawings to refer to the same or like parts. References made throughout this disclosure relating to specific examples and implementations are provided solely for illustrative purposes but, unless indicated to the contrary, are not meant to limit all examples.

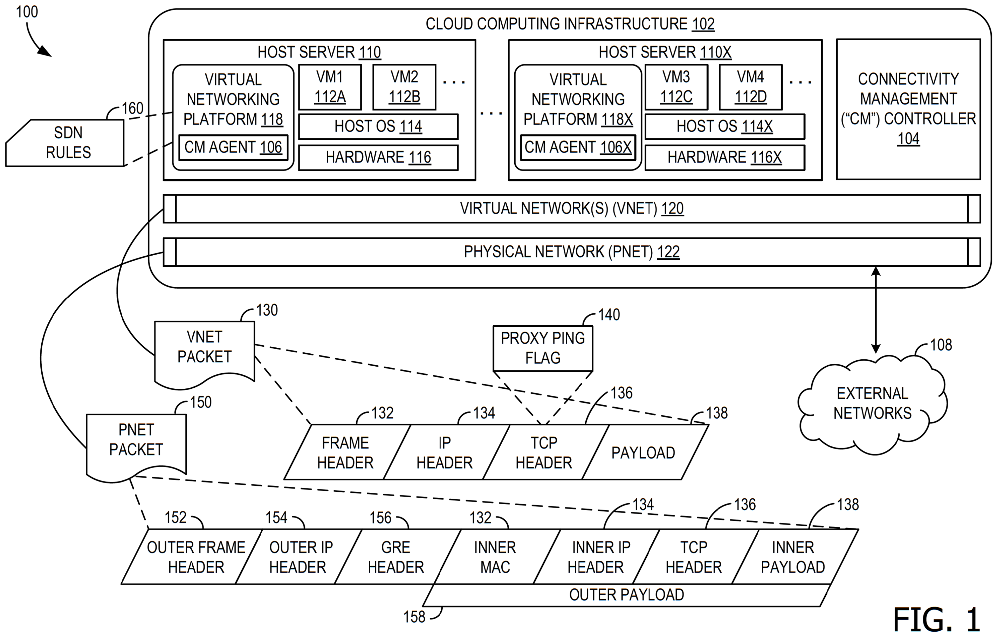

FIG. 1 illustrates an example architecture of a CM system 100 operating within a cloud computing infrastructure 102. In the example, the cloud computing infrastructure 102 provides numerous host servers 110-110X, each of which is configured to provide several virtual machines (VMs), such as the VMs 112A-112D (collectively, VMs 112) shown in FIG. 1, as well as potentially other virtual resources or services, such as containers, virtualized physical machines, and the like. This cloud computing infrastructure 102 is configured to support several distinct tenants, each of which may have their own private VMs 112, private virtual networks (or "Vnets") 120, and other associated resources, representing their own "private cloud" (not separately depicted). Within each private cloud, the cloud computing infrastructure 102 provides components of a software defined network (SDN) that allows the infrastructure 102 to provide the virtual networks 120 for the various clients ("tenants"). Further, the SDN allows the tenants to configure and deploy their own SDN rules 160 within their virtual network. The CM system 100 described herein provides novel tools that allow these SDN rules 160 to be tested within the virtual networks 120, as well as provides hardware components that both facilitate these novel testing tools as well as provides aspects of hardware acceleration for implementation of these SDN rules 160 within the infrastructure 102.

In the example, each host server 110 includes a set of hardware components (or just "hardware") 116, such as central processing units (CPUs), transient memory (e.g., RAM memory), persistent memory (e.g., disk drive storage, solid state storage), network interface cards (NICs), and numerous other hardware components that facilitate the operations described herein. Further, each host server 110 (as a single physical host) executes a virtualization service (e.g., a hypervisor, or the like) that is configured to allow multiple VMs 112 to run on that host server 110 (e.g., via abstracting and allocating hardware resources). This virtualization service is represented in FIG. 1 as the "host operating system (OS)" 114.

Each host server 110 includes one or more network connections to one or more physical networks ("pnets") 122. In examples, these pnets 122 are TCP/IP-based networks that allow the host servers 110-110X to communicate with each other, as well as potentially to other external networks 108, such as the Internet or other client networks. Further, each of the host servers 110 participate in a shared software defined network, represented in FIG. 1 as vnets 120. Each host server 110 includes a virtual networking platform (VNP) 118-118X that allows that host server 110 to participate in the SDN and the vnets 120. The VNP 118 includes various software components (e.g., executing on the host OS 114) as well as some hardware components (e.g., as part of hardware 116), as further described herein. The VNP 118 acts as a virtual networking stack, providing a distributed network data plane that underpins network virtualization and enforces network policies (e.g., as part of SDN rules 160) such as access control lists (ACLs), security group rules, and routing decisions.

In examples, the VNPs 118-118X provide a programmable, distributed virtual switch or network filtering engine that provides packet-level filtering and routing capabilities for the vnets 120, enabling efficient management of network traffic. The VNP 118 is integrated at the hypervisor level (e.g., within host OS 114) on each host server 110-110X, ensuring traffic is routed and filtered directly on the physical server hosting virtual machines. Further, the VNPs 118-118X ensure that each tenant's vnet(s) 120 are isolated from each other (e.g., preventing traffic from leaking between different tenants). In examples, the VNP 118 supports complex policies such as load balancing and network address translation (NAT). Further, the VNP 118 applies policies in a stacked manner, meaning that it layers network rules from multiple sources (e.g., network security groups (NSGs), virtual network peering, or service endpoints) and applies them in order to determine the final policy for each packet. More specifically, in examples, the VNPs 118-118X each implement a set of SDN rules 160 that define, for a given tenant and their associated vnet(s) 120, what policies are applied to the packets transiting the vnet(s) 120.

In examples, CM system 100 includes a CM controller 104 that orchestrates and centrally manages aspects of connectivity testing between VMs 112 and their associated SDN rules 160 within the vnets 120. More specifically, the CM controller 104 causes "proxy pings" to be generated and transmitted between two VMs 112 within a given vnet 120. These proxy pings are packets on a given vnet 120 (e.g., within the vnets 120 of a given tenant) that are sourced from one VM 112A (e.g., the "source VM") and target another VM 112C of that tenant (e.g., the "target VM"). However, the CM system 100 avoids using the VMs 112 themselves to generate these proxy pings. Rather, each VNP 118 on a given host server 110 includes a CM agent 106 (e.g., executing within the respective host OS 114), and this CM agent 106 is configured to both generate the proxy pings on behalf of the VMs 112 of their own host server 110 as well as respond to proxy pings received from this or other host servers 110.

FIG. 1 shows an example vnet packet 130 for a proxy ping. In this example, the vnet packet 130 includes a frame header 132 (e.g., an OSI layer 2, data link layer packet header for an Ethernet frame), an Internet Protocol (IP) header 134 (e.g., an OSI layer 3, network layer packet header for an IP packet), a Transport Control Protocol (TCP) header 136 (e.g., an OSI layer 4, transport layer packet header for a TCP packet), and a payload 138 (e.g., deeper data being transported by the vnet packet 130 to the destination, perhaps including deeper headers of higher layers and/or end user data). Each of the headers 132-136 of this vnet packet 130 reference entities within the virtual networks 120 (e.g., virtual mac addresses, virtual IPs of VMs 112, and the like).

In situations where the vnet packet 130 is bound for another host server 110X, the source host server 110 generates a pnet packet 150 for the physical network 122, encapsulating the contents of the vnet packet 130 into the pnet packet 150. More specifically, the pnet packet 150 is created with an outer frame header 152 (e.g., identifying a physical mac address of the target host server 110X or mac address of the next hop router), an outer IP header 154 (e.g., identifying IP addresses of the source and target host servers 110, 110X), a generic routing encapsulation (GRE) header (e.g., Virtual Extensible LAN (VXLAN), allowing encapsulation of layer 2 ethernet frames such as the vnet packet 130), and all of the contents of the vnet packet 130 being encapsulated as an outer payload 158 of the pnet packet 150.

In the example of a proxy ping, the CM system 100 identifies the vnet packet 130 as a proxy ping-type packet via use of a flag 140 provided within the TCP header 136 of the vnet packet 130. In some examples, the CM system 100 uses extended TCP headers and sets a specific value of KIND field (1-byte integer, e.g., an unused/unallocated integer such as 254) in a TCP option included in the TCP header 136. As such, vnet packets 130 having this particular KIND value for a TCP option in the TCP header 136 are identifiable as proxy ping-type packets.

During operation, when the CM controller 104 initiates testing connectivity between two particular VMs within a given tenant vnet 120, the CM controller 104 transmits a proxy ping initiation message to the CM agent 106 of the host server 110 hosting that VM. This proxy ping initiation message identifies the source VM (the VM from which this proxy ping is to be emulated, e.g., a virtual IP address of that source VM or other identifying information), the target VM (the VM being sent the proxy ping, e.g., a virtual IP address of that target VM), and perhaps other information such as a TCP destination port (the TCP port with which to target this vnet packet 130 on the target VM). In some examples, the proxy ping packet is created as a SYN-type TCP header 136 (e.g., with SYN flag set to 1 within the flags control bits of the TCP header 136).

In an example, the CM controller 104 sends such a proxy ping initiation message to the CM agent 106 on the host server 110, identifying the source VM as VM1 112A and the target VM as VM3 112C. Upon receipt of this proxy ping initiation message, the source host server (e.g., host server 110, which currently hosts VM1 112A) generates the vnet packet 130 as a proxy ping packet. More specifically, the CM agent 106 creates the components 132, 134, 136, 138 of the vnet packet 130, identifying the source IP in the IP header 134 as the virtual IP address of the source VM1 112A, the target IP in the IP header 134 as the virtual IP address of the target VM 3 112C, and adds the proxy ping flag 140 to the TCP header 136 (e.g., as a TCP option with a KIND value of 254 (or other predefined value).

After creating this vnet packet 130 for the proxy ping, the CM agent 106 inserts this vnet packet 130 into the packet processing pipeline of the VNP 118 for processing (e.g., for transmission to the target VM3 112C). In examples, this proxy ping vnet packet 130 is inserted into the packet processing pipeline at a processing layer just below the VMs 112 themselves. In other words, the vnet packet 130 is inserted at a layer above (e.g., before) any of the rules processing of the SDN rules 160, at the same layer as other outbound packets that are naturally generated by the source VM1 112A.

As such, this proxy ping vnet packet 130 is inserted into packet processing as if it had been generated by the source VM1 112A itself (even though it has been created by the CM agent 106). Subsequently, this vnet packet 130 goes through the same processing steps as other outbound packets from the source VM1 112A. More specifically, the VNP 118 applies the various SDN rules 160 to the packet (e.g., without regard to whether or not it is a proxy ping packet).

Upon receipt of the proxy ping vnet packet 130 at the target host server 110X (e.g., the host server currently hosting the target VM3 112C), the VNP 118X of the target host server 110X similarly applies the SDN rules 160 as the proxy ping vnet packet 130 ascends the packet processing pipeline toward the target VM3 112C. After the VNP 118X has applied the SDN rules 160 to the vnet packet 130 (e.g., at a time when the packet would typically be ready to send into the target VM3 112C for processing in the TCP/IP stack of the local OS), the VNP 118X evaluates the vnet packet 130 and determines that this vnet packet 130 is a proxy ping-type packet (e.g., by identifying the TCP option with KIND value of 254 in the received TCP header 136).

For those packets that are determined to be proxy ping packets, the target VNP 118X intercepts these proxy ping-type packets and does not transmit those packets into the target VM3 112C. Rather, the target VNP 118X generates a response proxy ping packet (e.g., on behalf of the target VM3 112C) and transmits that response proxy ping packet back to the source host server 110. More specifically, the response proxy ping packet is similar to the original proxy ping vnet packet 130, but reversing the virtual IP addresses (e.g., identifying the source VM1 112A as the target of this response packet, the target VM3 112C as the source of this response packet), as well as including the proxy ping flag 140. In some examples, the response proxy ping packet is configured as an ACK-type packet (e.g., responding to a SYN packet), setting the ACK flag to 1 (e.g., in the flags control bits of the TCP header 136), as well as perhaps a sequence number, an acknowledgement number, and the like. And like the original proxy ping vnet packet 130, this response proxy ping packet is also inserted into the downstream packet processing on the VNP 118X (e.g., as if the target VM3 112C had generated the packet), thereby allowing the response proxy ping packet to likewise be subject to the SDN rules 160.

Upon receipt of the response proxy ping packet at the source host server 110, the VNP 118 similarly allows the packet to be subject to the SDN rules 160 as the packet ascends the packet processing pipeline. However, the VNP 118 likewise identifies this response proxy ping packet as a proxy ping-type packet and intercepts the packet, thereby keeping the packet from reaching the source VM1 112A. Further, the VNP 118 also identifies that this is an ACK-type packet (e.g., from the ACK flag of the TCP header 136) and reconciles this response with the original SYN packet, thereby completing this proxy ping.

In some examples, the VNP 118 on the source host server 110 and/or the target host server 110X maintains a database (e.g., a list) of proxy ping packets sent by the host server 110 and may maintain a current status (e.g., marking a proxy ping as outstanding when the initial proxy ping packet is transmitted, then updating the status as completed when a corresponding response is received). In some examples, the source VNP 118 captures an initial timestamp when the initial proxy ping packet 130 is sent and captures reply timestamp when the response proxy ping packet is received. As such, these two timestamps can be used to determine how long it took for the proxy ping to be processed (e.g., as a differential between the two timestamps), thereby allowing the CM system 100 to determine latency values between particular VMs.

Packet insertion into the packet processing pipeline of the VNP 118 thus allows the proxy ping vnet packets 130 to be subject to the SDN rules 160 currently configured in the system, both at the source and at the target host servers 110, 110X, just as any other TCP/IP packet being sent between the source and target VMs 112A, 112C. As such, these proxy pings serve as a connectivity test between the VMs based on the SDN rules 160, thereby allowing visibility into particular areas of rules misconfiguration within the SDN. Further, the capture of timestamps at generation and receipt thus allows latency measurements between particular VMs 112 and particular host servers 110. Additionally, since these proxy pings are generated below the VM level, yet still use the VM IPs as source and target IPs, such packets allow more detailed and specific testing of network connectivity than a conventional ICMP-based ping between the VMs, and without the need to have an agent installed and running within each of the VMs.

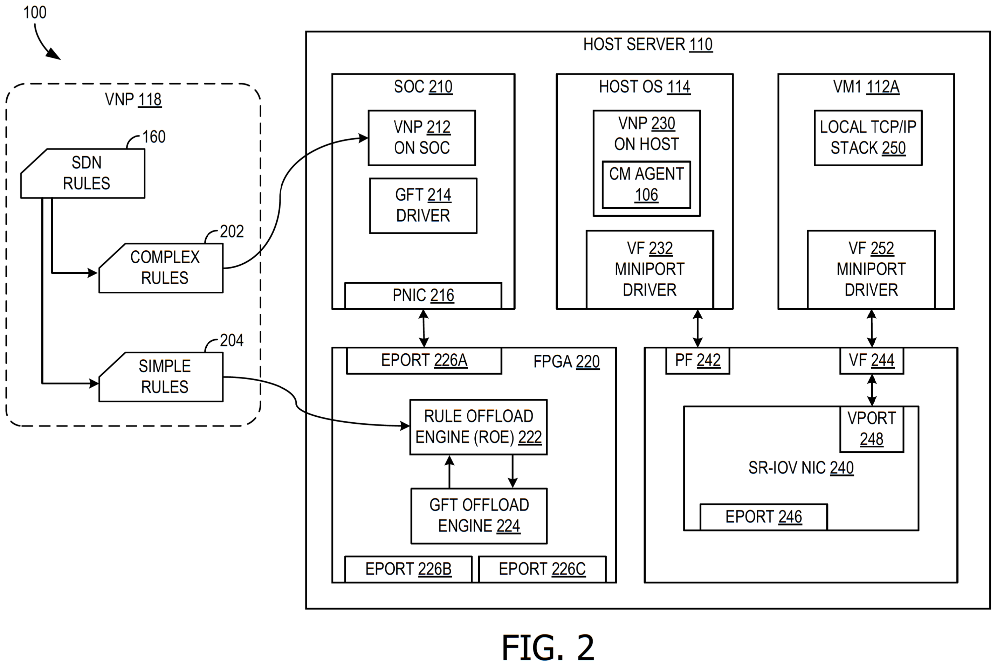

FIG. 2 is an architecture diagram of the example host server 110 of FIG. 1 that includes additional hardware components that facilitate both the proxy pings described in FIG. 1 as well as enables hardware aspects of hardware acceleration for application of SDN rules 160 within the host servers 110. In examples, the host server 110 operates within the CM system 100 of FIG. 1. In this example, several software components of the host server 110 are shown, including the host OS 114 and one or more VMs such as VM1 112A executing on the host server 110. Additionally, the host server 110 includes several hardware components, including an SOC 210, an FPGA 220, and a Single Root I/O Virtualization (SR-IOV) NIC 240. Each of these hardware components contribute to the implementation and support of the virtual networking provided by the host server 110 for the benefit of the tenant VMs 112. Further, several of the hardware and software components are operable to apply the SDN rules 160 to virtual network traffic (e.g., vnet packets 130) for the vnets 120 and pnets 122 shown in FIG. 1.

In the example, the SOC 210 is a system-on-chip hardware component that includes VNP on SOC 212, a GFT driver 214, and a physical network interface card (PNIC) 216. The VNP on SOC 212 is one of the hardware components of the VNP 118 provided by the host server 110 that is responsible for applying some or all of the SDN rules 160 to the virtual network traffic that flows within the SDN of the tenant vnets 120 (e.g., traffic coming out of or attempting to enter into the VMs 112). In examples, the VNP on SOC 212 allows the VNP 118 to offload some aspects of packet processing to dedicated hardware (e.g., features that would otherwise have to be processed by the VNP on host 230, and thus by the CPUs of the host server 110). Such operations performed by the VNP on SOC 212 include, for example, network-intensive operations like packet classification, filtering, and forwarding, layer 2 and layer 3 packet filtering (e.g., based on SNP rules 160), security functions such as application of ACLs or distributed firewall rules, and virtual network functions (VNFs) acceleration (e.g., for load balancing, NAT, encryption, or the like). The GFT driver 214 is a device driver that allows the SOC 210 to interact with a generic flow table (GFT) offload engine (or just "GFT") 224 (e.g., implemented in the FPGA 220 in this example), which is described in greater detail below. As such, the rules 160, 202 can include, for example, ALLOW, BLOCK, METER, NAT, DYNAMIC NAT, DECAPSULATION, MAPPING, ENCAPSULATION, PROFILE, REDIRECT, ROUTE ENCAPSULATION, TUNNELED NAT, QOS, TRANSPOSITION, PAROUTE, MARK, PINGRESPONSE, CAREDIRECT, MAPNAT, or the like.

In examples, some aspects of hardware acceleration of the SDN is performed by the GFT 224 (e.g., in the FPGA 220). The GFT 224 is a high-speed packet processing component that maintains state information about active flows within the SDN. The GFT 224 is used to quickly classify and forward packets without reapplying policies (e.g., some or all of the SDN rules 160) for each packet in an already-established flow. For example, when a first packet of a new flow arrives, the VNP 118 performs packet classification based on multiple criteria (e.g., source IP address, destination IP address, source port, destination port, protocol, and the like). Further, the VNP 118 also checks this first packet against defined network policies (e.g., ACLs, routing rules, security policies included in the SDN rules 160). If the packet complies with these policies, a new entry (e.g., a new "flow") is added to the GFT 224, associating the flow characteristics with the appropriate action (e.g., allow, block, redirect, NAT). After the flow is learned and added to the GFT 224, subsequent packets matching the flow can bypass policy evaluation (e.g., under the SDN rules 160 applied by the VNP on SOC 212, the rule offload engine (ROE) 222, or both), thereby reducing processing overhead for packets that belon to established flows.

In addition to providing the GFT 224, the FPGA 220 is also programmed with a rule offload engine (ROE) 222. The ROE 222 is configured to implement a subset of the SDN rules 160, namely "simple rules" 204. In examples, the VNP 118 identifies the simple rules 204 from the SDN rules 160 and configures the ROE 222 to implement these simple rules 204 (e.g., on behalf of the VNP on SOC 212 or the VNP on host 230). Simple rules 204, in some examples, include SDN rules 160 that do not involve packet manipulation, such as blocks or allows that follow a simple pattern (e.g., matching one or more of source IP, destination IP, source port, destination port), transposition, encapsulation, decapsulation, network address translation (NAT), PaRoute (packet routing), mark, CARedirect, or mapnat . In some examples, the VNP 118 (e.g., one of the VNP on host 230, the CM agent 106, the VNP on SOC 212) automatically identifies the simple rules 204 from the full SDN rules 160 based on predefined rule types, thus allowing the VNP 118 to automatically separate the SDN rules 160 into the simple rules 204 (e.g., a first rule set to be applied by the ROE 222) and complex rules 202 (e.g., the remainder of the SDN rules 160 not included in the simple rules 204, a second rule set to be applied by the VNP on SOC 212). Simple rules 204 represent a subset of rules that are more easily implemented in the ROE 222, and thus can potentially benefit from quicker processing provided by the ROE 222 (e.g., without necessarily having to be subject to application of the entire SDN rules 160), where the complex rules 202 thus are the remainder of the SDN rules 160 (or perhaps the entirety of the SDN rules 160). During operation, the VNP 118 configures the ROE 222 with the simple rules 204 (e.g., programs the FPGA 220, pushes the simple rules 204 to the ROE 222, or the like), thereby causing the ROE 222 to begin applying those simple rules 204 to incoming packets for new flows.

In some examples, the host server 110 also includes an SR-IOV NIC 240. The SR-IOV NIC 240 is a network interface card that allows a physical NIC to be shared efficiently among multiple VMs (e.g., by creating virtual instances of the NIC, known as Virtual Functions (VFs) 244. The SR-IOV NIC 240 presents a Physical Function (PF) 242 to the host OS 114, providing a full-featured representation of the NIC 240 used for management and configuration (e.g., via a VF miniport driver 232 on the host OS 114). The VF(s) 244 are exposed to VMs 112, each VF 244 acting as a separate NIC for that particular VM 112, with its own resources, such as a dedicated queue. Each VM 112 includes a local TCP/IP stack 250 and a VF miniport driver 252 through which that VM 112 can communicate directly with their respective VF 244, thereby bypassing the network stack of the hypervisor or host OS 114 (not separately shown). In proxy ping examples, the SR-IOV NIC 240 is not used (e.g., as packet traversal does not enter into the VM 112, and thus does not rely on the VF 244 of the SR-IOV NIC 240. In rules offloading examples with the ROE 222, the ROE 222 and VNP on SOC 212 apply the SDN rules 160 to ingress or egress packets (e.g., bound into or out from the VMs 112, respectively) that are not yet associated with a flow, either sending the allowed packets to the SR-IOV NIC 240 in the case of ingress packets (e.g., after the ingress packet passes the SDN rules 160) or receiving the egress packets from the VM 112 via the SR-IOV NIC 240 before applying the SDN rules 160 and establishing a new flow.

In examples, the VNP 118 provided by the host server 110 collectively includes at least the components of the VNP on host 230 (e.g., a software component, including the CM agent 106), the VNP on SOC 212 (e.g., a hardware component on the SOC 210), and both the GFT 224 and the ROE 222 (e.g., hardware components programmed on the FPGA 220). In some examples, the VNP 118 and its associated components provides the proxy ping functionality described herein. In some examples, the VNP 118 provides the rule offloading and separation of operational functions between the ROE 222 and the VNP on SOC 212 as described herein. In some examples, the VNP 118 provides both the proxy ping functionality and the rule offloading and separation described herein.

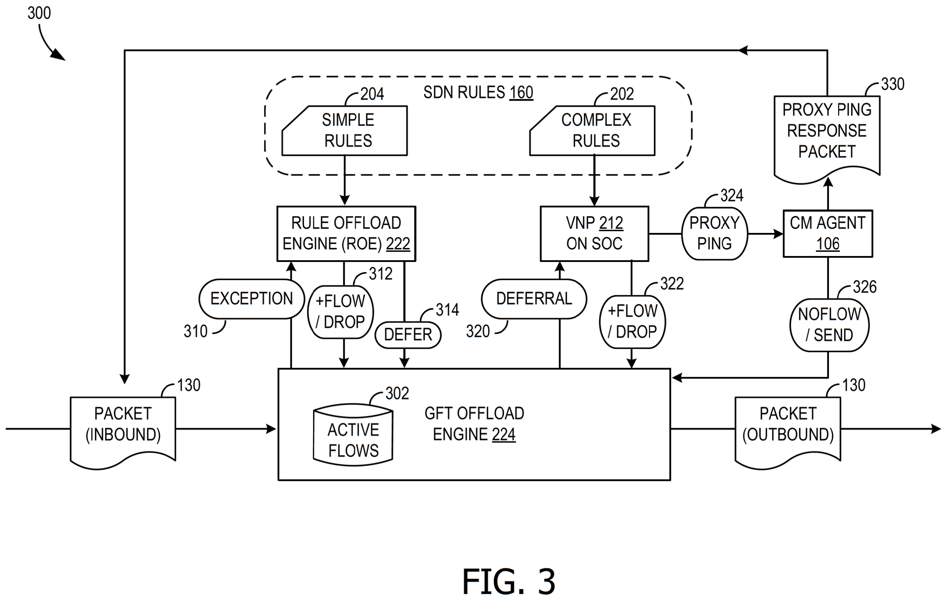

FIG. 3 illustrates a portion of a packet processing pipeline 300 for processing a packet 130 via the VNP 118 of the CM system 100 shown in FIG. 1. In examples, the pipeline 300 includes hardware and software components of the host server 110 shown in FIG. 2. Further, in some examples, the packet 130 is a proxy ping packet as shown and described in FIG. 1 (e.g., and thus subject to application of the SDN rules 160), where in other examples, the packet 130 is another packet (e.g., not a proxy ping-type packet) that may be a first packet for a potentially new flow (e.g., and thus subject to application of the SDN rules 160) or a subsequent packet for an already active flow (e.g., and thus not subject to the SDN rules 160). Additionally, it should be noted that, while the example packet 130 of FIG. 3 is identified as "inbound", this packet can be either an ingress packet (e.g., bound toward a VM hosted by the host server 110, such as VM1 112A, perhaps originating from a VM 112X on another host server 110X or some other computing device on one of the external networks 108) or an egress packet (e.g., having been generated by a VM hosted by the host server 110, such as VM1 112A, perhaps bound for another VM on this host server 110 or another host server 110X, or to some other computing device on one of the external networks 108). In other words, ingress packets and egress packets are subject to aspects of this example packet processing pipeline 300 shown in FIG. 3, with some slight variations in certain situations.

In the example, the GFT 224 manages an active flows database (or just "active flows") 302. Active flows 302 includes an entry for each flow that is currently active on the host server 110. Such entries, in examples, include a source IP address, a destination IP address, source and/or destination ports, and one or more protocol identifiers (e.g., TCP, UDP, ICMP, or the like). Upon receipt of the packet 130, the GFT 224 compares the data in the packet 130 (e.g., the source and target IP addresses appearing in the IP header 134, the source and destination ports appearing in the TCP header, and the protocol type of the packet 130) with each of the entries in the active flows 302 searching for a match. If the data from the packet 130 matches one of the entries in the active flows 302, then the GFT 224 sends the packet along (as "outbound packet" 130, e.g., either up to one of the VMs 112 via the host OS 114 or the SR-IOV NIC 240, or out to the pnet 122 and some target external to the host server 110). Otherwise, the inbound packet 130 is identified as an exception and is sent to the ROE 222 as exception 310. In some examples, the GFT 224 inspects the inbound packet 130 to determine whether or not this packet is a proxy ping-type packet (e.g., identifying whether the proxy ping flag 140 is set within the TCP header 136) and, if the inbound packet 130 is identified as a proxy ping-type packet (e.g., even if an active flow 302 entry is identified), then the inbound packet is marked as an exception and is sent to the ROE 222 as exception 310.

When receiving the exception 310, the ROE 222 applies the simple rules 204 to the packet 130. This application of the simple rules 204 to the inbound packet 130 can, in some situations, be dispositive for that packet 130 (e.g., resulting in no further need to defer the packet 130 up to the VNP on SOC 212, and thus no further application of the complex rules 202 to this packet 130). For example, in some situations, the packet 130 may be identified as prohibited (e.g., to be dropped). In such situations, and regardless of whether the packet 130 is a proxy ping-type packet or not, the packet 130 is dropped based on the simple rules 204, and thus the GFT 224 and the VNP 118 cease processing this packet 130. In other situations, the packet 130 may be identified as allowed (e.g., to be allowed to continue on toward its target without further application of additional SDN rules 160). In such situations, the ROE 222 identifies the packet 130 as allowed to the GFT 224, which in turn generates a new entry in active flows 302 for that packet and subsequently sends out the outbound packet 130. These two dispositive determinations are grouped together in FIG. 3 as "+flow / drop" 312, either adding a flow (for allowed packets) or dropping (for disallowed packets) the inbound packet 130.

In situations where the application of the simple rules 204 is not dispositive for the inbound packet 130, or in situations where the inbound packet 130 is both identified as a proxy ping-type packet and is not dropped by the application of the simple rules 204, the ROE 222 identifies the inbound packet 130 to defer 314 for further rules processing (e.g., to the VNP on SOC 212). In these examples, such deferral refers to identifying the inbound packet 130 for redirection to, and processing by, the VNP on SOC 212 (e.g., thereby causing the inbound packet 130 to be subject to the complex rules 202). In response to the defer 314 command, the GFT 224 sends the packet 130 to the VNP on SOC 212 for further processing (e.g., as deferral 320).

The VNP on SOC 212, as described above, applies the complex rules 202 (or the complete SDN rules 160) to the packet 130. Likewise, in some situations, the VNP on SOC 212 identifies the packet 130 as allowed or denied based on those rules 202 or 160. Since these are the last of the SDN rules 160 provided by the VNP 118, the packet 130 will be identified as either allowed or denied. In situations where the packet 130 is not a proxy ping-type packet, a response is sent back to the GFT 224 with the disposition (e.g., "+flow / drop" 322), thereby causing the GFT 224 to either add an active flow 302 entry for this packet 130 and send the outbound packet 130 or to drop the packet.

In situations where the packet 130 is identified as a proxy ping-type packet and is indicated as allowed by the VNP on SOC 212, the packet 130 is sent to the CM agent 106 as a proxy ping 324. This current packet 130, indicated as a proxy ping-type packet, can be either an original proxy ping packet (e.g., being received by the target VM 110X) or a proxy ping response packet (e.g., being a response received back at the source node VM1 112A in response to an original proxy ping packet).

Accordingly, and as described above, if the packet 130 is an original proxy ping packet (e.g., either on the source host server 110A as the original proxy ping packet is in egress, or on the target host server 110X as the original proxy ping packet is in ingress), the CM agent 106 sends a command 326 back to the GFT offload engine 224 that the packet 130 is accepted, but to not create a new entry in active flows 302 for this packet 130. In addition, if the packet 130 is also an original proxy ping packet in egress (e.g., being sent at the source host server 110), the CM agent 106 also instructs the GFT 224 to send the original proxy ping packet (e.g., as outbound packet 130). On the other hand, if the packet 130 is an original proxy ping packet in ingress (e.g., being received at the target host server 110X), the CM agent 106 creates a proxy ping response packet 330 and submits that packet into the packet processing pipeline 300 for transmittal back to the source IP address identified in the inbound packet 130. This proxy ping response packet 330 will similarly be processed by the packet processing pipeline 300 (e.g., once in egress from the target host server 110X, once in ingress on the source host server 110), as described below.

If the packet 130 (e.g., still at the proxy ping 324 and the CM agent 106) is identified as a proxy ping response packet in egress (e.g., being sent at the target host server 110X), the CM agent 106 instructs the GFT 224 that the packet 130 is accepted, and to send the packet (e.g., as outbound packet 130), but to not create an entry in the active flows 302. If the packet 130 is identified as a proxy ping response packet in ingress (e.g., being received at the source host server 110), the CM agent 106 instructs the GFT 224 that the packet 130 is accepted, and to not create an entry in the active flows 302. Also in the ingress situation, since this packet 130 has now been identified as a successful response to the original proxy ping on the source host server 110, the CM agent 106 performs operations to complete the proxy ping. In some examples, these proxy ping completion operations include taking a response receipt timestamp at the time of receipt, calculating a differential time value between a sent timestamp and the response receipt timestamp, and/or storing or transmitting the differential time value as a latency value between the source VM1 112A and the target VM3 112C.

In some examples, the ROE 222 is globally enabled or disabled on a given host server 110 (e.g., as to all VMs 112 hosted by the host server 110). In other examples, the ROE 222 is enabled on a per-entity basis (e.g., on a per-VM basis, separately set to either on or off for each particular VM 112). In such embodiments, the GFT 224 additionally inspects the inbound packet 130 at the time of receipt (e.g., after application of the packet 130 to the active flows 302). If the packet 130 is deemed an exception 310 (e.g., is a proxy ping-type packet, or is not identified as an active flow 302), the GFT 224 then determines whether or not the ROE 222 is enabled for the implicated local VM. More specifically, because this packet 130 is either in ingress (e.g., targeting one of the VMs 112 hosted by this receiving host server 110), or in egress (e.g., being sent by one of the VMs 112 hosted by this sending host server 110), or perhaps both (e.g., being sent from one VM 112 to another VM 112 hosted on this same host server 110), then the GFT 224 identifies which local VM is implicated and looks up the ROE enabled flag for that VM 112. If the ROE enabled flag is set to on (e.g., enabled), then the packet 130 is sent to the ROE 222 as described above (e.g., as exception 310). If the ROE enabled flag is set to off (e.g., disabled), then the packet 130 is sent to the VNP on SOC 212 (e.g., as deferral 320), along with an indication that the VNP on SOC 212 is to apply all of the SDN rules 160 (e.g., both the simple rules 204 and the complex rules 202) to the packet 130.

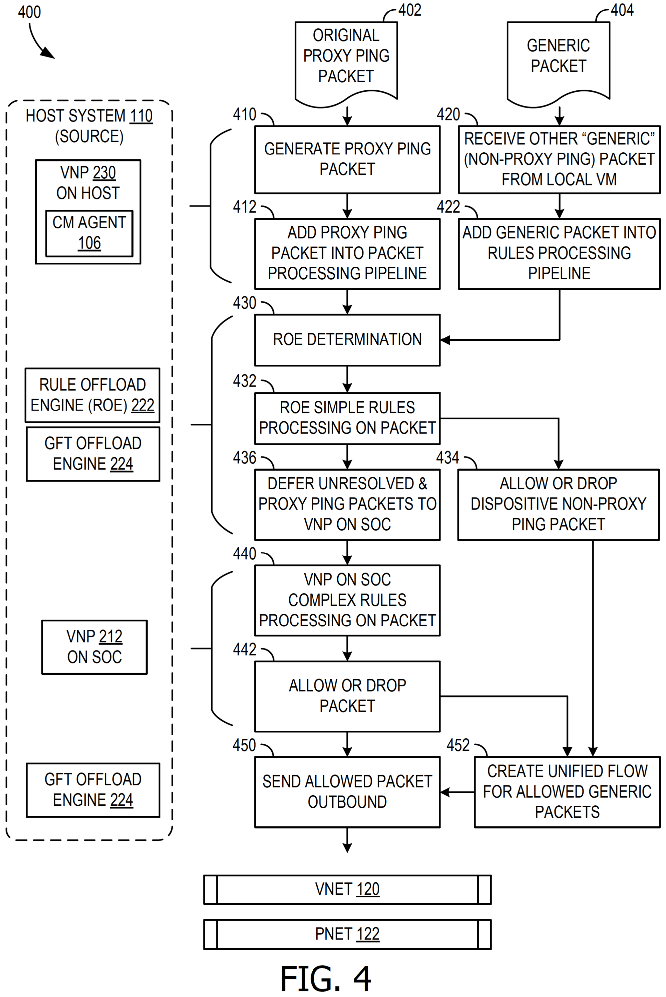

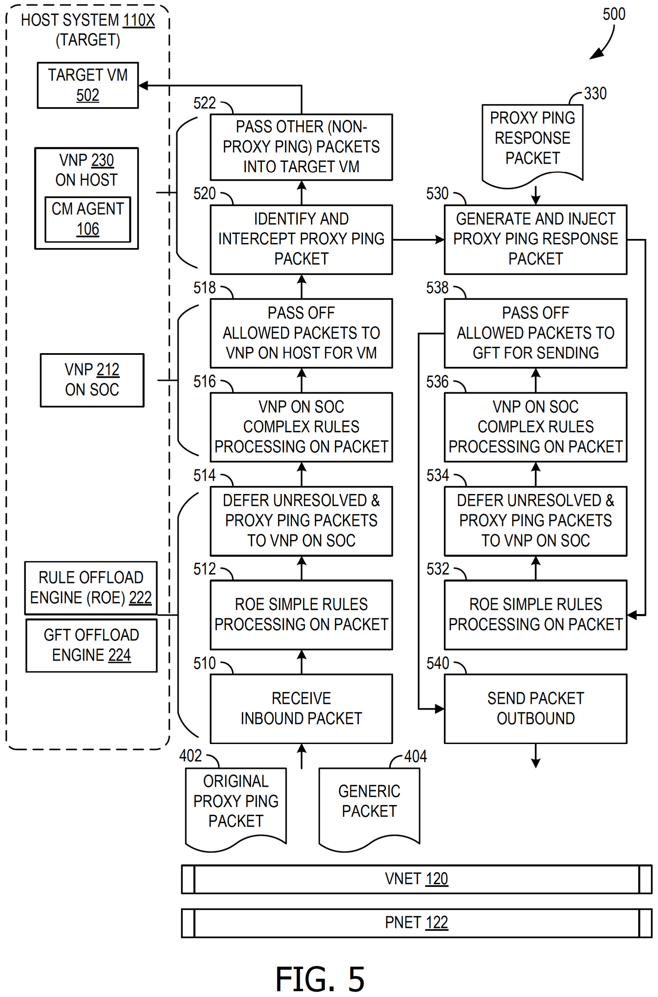

FIGs. 4 to 6 provide example process flows for the packet processing pipeline 300 of FIG. 3, identifying additional details illustrating how an example original proxy ping packet is sent (e.g., by source host server 110, with VM1 112A as the source IP), how the original proxy ping packet is processed upon receipt (e.g., by target host server 110X, with VM3 112C as the target IP), and how a proxy ping response packet is generated in response to the original proxy ping packet (e.g., likewise by the target host server 110X), as well as indicating examples of which components of the VNP 118 perform particular operations in an example embodiment. In examples, components of the VNP 118 and the host server 110 perform packet processing operations such as shown and described in the packet processing pipeline 300 of FIG. 3 within the architecture of the CM system 100 shown in FIG. 1. Further, it is assumed that both the source and target host servers 110, 110X have the architecture shown in FIG. 2. It should be understood that FIG. 4 and FIG. 5 illustrate both proxy ping-type packets and associated operations, as well as "generic" packets (e.g., all packets that are not proxy ping-type packets), as numerous processing operations are shared amongst both types of packets (with some minor variants).

FIG. 4 is a flowchart 400 illustrating example operations for processing an original proxy ping packet 402 and/or a generic packet 404 during egress. In the proxy ping example, when addressing processing of the original proxy ping packet 402, the CM agent 106 on the host server 110 has been instructed to initiate a proxy ping between VM1 112A and a remote VM, namely VM3 112C on the host server 110X. In the generic packet example, the generic packet is not a proxy ping-type packet, and the generic packet 404 has been generated by one of the VMs hosted by the host server 110 and is outbound (e.g., to some other host server, such as host server 110X).

In the proxy ping example, the CM agent 106 generates the original proxy ping packet 402 at operation 410 (e.g., generating the vnet packet 130 with a structure as shown in FIG. 1, including the virtual IP address of VM1 112A as the source IP and the virtual IP address of VM3 112C as the destination IP within the IP header 134, with source and destination ports added into the TCP header 136, as well as setting the proxy ping flag 140 to indicate a proxy ping-type packet, as described above). At operation 412, the VNP on host 230 adds the original proxy ping packet 402 into the packet processing pipeline 300 (e.g., as the inbound packet 130 shown in FIG. 3).

In the generic packet example, at operation 420, the VNP on host 230 receives the generic packet 404 from a local VM (e.g., VM2 112B). Such generic packets are typically received from the VMs 112 after they are sent out via their local TCP/IP stack 250 (shown in FIG. 2), perhaps flowing through the SR-IOV NIC 240 to reach the VNP on host 230.

As such, at this stage, the packet processing pipeline 300 of FIG. 3 begins processing the packets 402, 404 (e.g., as inbound packet 130). As many of these operations are similar, the processing of these packets 402, 404 is discussed together in several of the following operations, identifying differences in the operations where pertinent. Further, while some of these processing operations are discussed by referring to both packets 402, 404 together, it should be understood that these packets 402, 404 are individually processed during operation, and that this combined discussion is to illustrate the overlaps between the two different types of packets 402, 404.

At operation 430, in the example, the GFT 224 inspects the packet and performs an ROE determination (e.g., determining whether or not to use the ROE 222 to process the packet). The ROE determination of operation 430 includes, for example, determining whether or not the packet 402, 404 is a proxy ping-type packet. As discussed above, for generic packets 404, the GFT 224 determines whether or not the generic packet 404 matches an active flow 302 and, if a matching active flow 302 is found, the GFT 224 proceeds to send out that generic packet 404 without further processing (e.g., as outbound packet 130 shown in FIG. 3). For purposes of discussion, the example generic packet 404 does not match an active flow 302, and thus continues in the packet processing pipeline 300.

In examples where ROE is enabled per entity (e.g., per VM), the ROE determination of operation 420 also includes determining whether or not the sending VM (e.g., VM1 112A for the proxy ping packet 402, VM2 112B for the generic packet 404) is configured with ROE enabled. If ROE is disabled, operations 432 and 434 are skipped for packets 402, 404 and processing continues on with operation 440, discussed below.

In situations where the generic packet 404 does not match an active flow 302, and where the proxy ping packet 402 is identified as such, and that ROE is enabled for these packets 402, 404, the GFT 224 thus identifies the packets 402, 404 as exceptions 310 and sends those packets 402, 404 to the ROE 222 for application of the simple rules 204. At operation 432, the ROE 222 applies the simple rules 204 to the packets 402, 404. As described above, in some situations, packets 402, 404 can be conclusively allowed or disallowed by the simple rules 204. If, for example, either packet 402, 404 is disallowed by the simple rules 204, the packet 402, 404 is identified to be dropped 312 by the ROE 222, and the GFT 224 thus drops the packet 402, 404 at operation 434 (e.g., does not send the outbound packet 130). If the generic packet 404 is allowed by the simple rules 204, the ROE 222 identifies that the packet 404 is allowed at operation 434 and commands the GFT 224 to send the packet 404 without further rules processing at operation 450 (e.g., without deferral 320 to VNP on SOC 212). Further, for allowed generic packets 404, the allowance of the generic packet 404 causes the GFT 224 to add a new entry in the active flows 302 (e.g., as "+flow" 312), thereby defining a new flow at operation 452 (e.g., to be used with subsequent, like generic packets 404 coming from the same source IP, targeting the same destination IP, and such).

For those packets 402, 404 that are not expressly allowed or denied by the ROE 222 and application of the simple rules 204, and for all proxy ping packets 402 (e.g., "unresolved packets"), the ROE 222 commands the GFT 224 to defer 314 the unresolved packet 402, 404 to the VNP on SOC 212 for further rules processing at operation 436. All proxy ping type packets 402 are considered "unresolved" at this stage, as those packets 402 are always evaluated by both the ROE 222 and the VNP on SOC 212 (e.g., even if the proxy ping packet 402 is expressly allowed by the simple rules 204 on the ROE 222).

In situations where the example packet 402, 404 is an unresolved packet at this stage, the VNP on SOC 212 receives the packet 402, 404 and applies the complex rules 202 to that packet 402, 404 at operation 440. In the example, the application of the complex rules 202 is dispositive, as this is the last set of SDN rules 160 applied in the example architecture 200, and thus results in the packet 402, 404 either being allowed (and, in some instances, modified) or denied. As such, at operation 442, the VNP on SOC 212 identifies whether the packet 402, 404 is allowed or dropped. In the case of denied packets, the VNP on SOC 212 drops the packet, either not responding to the deferral 320, or responding to the GFT with instruction to drop the packet 402, 404 (thereby causing the GFT 224 to not send the outbound packet 130). In the case of allowed packets, the VNP on SOC 212 instructs the GFT 224 that the packet 402, 404 is allowed, thereby causing the GFT 224 to send the allowed packet (e.g., as outbound packet 130). Further, in the case of an allowed generic packet 404, the GFT 224 also creates a unified flow (e.g., an entry in the active flows 302) based on the allowed generic packet 404.

Accordingly, in both cases of proxy ping packets 402 and generic packets 404, such packets 402, 404 are subjected to the simple rules 204 as applied by the ROE 222, as well as the complex rules 202 as applied by the VNP on SOC 212 (e.g., if deferred), leading to the packet 402, 404 either being dropped by the SDN rules 160 or sent outbound for its intended destination.

FIG. 5 is a flowchart 500 illustrating example operations for processing the example original proxy ping packet 402 and/or the generic packet 404 during ingress at the target host server 110X. In the example, the GFT 224 on the target host server 110X receives the packet 402, 404 at operation 510. In some examples, while not shown in FIG. 5, the GFT 224 also performs an ROE determination 430 for the packet 402, 404 at this stage (e.g., as shown and described in FIG. 4). Similar to the ROE determination 430 of FIG. 4, generic packets 404 with active flows 302 are passed outbound without further inspection. Since this generic packet 404 is inbound (e.g., ingress), the generic packet 404 is passed along to the destination VM on this target host server 110X based on the destination IP address (e.g., via the VNP on host 230, via the SR-IOV NIC 240). Further, similar to the ROE determination 430, packets 402, 404 that do not have ROE enabled thus skip operations 512 and 514, instead passing directly as a deferral 320 to the VNP on SOC 212.

In cases where ROE is enabled for the target VM, the GFT 224 passes the packet 402, 404 to the ROE 222, thereby causing the ROE 222 to apply the simple rules 204 to the packet 402, 404 at operation 512. Like the egress example of FIG. 4, if the packet 402, 404 is dispositively allowed or denied by the simple rules 204, the ROE 222 instructs the GFT 224 to allow or drop the packet 402, 404 (e.g., similar to operation 434 of FIG. 4), and also to create a new entry in the active flows 302 in the case of allowed generic packets 404 (e.g., similar to operation 452). For packets 402, 404 that are not dispositively allowed or denied by the simple rules 204, and for all proxy ping packets 402, the GFT 224 defers 320 the packet 402, 404 to the VNP on SOC 212 at operation 514 (e.g., similar to operation 436).

At operation 516, in the example, the VNP on SOC 212 applies the complex rules 202 (or the full SDN rules 160) to the packet 402, 404 (e.g., similar to operation 440). Each packet 402, 404 is either allowed or denied by application of the complex rules 202 at this stage. As such, allowed packets 402, 404 are passed to the VNP on host 230 for further processing at operation 518 (or to the SR-IOV NIC 240, in the case of allowed generic packets 404 for VMs that have a defined VF 244). In the case of denied packets 402, 404, while not shown in FIG. 5, such packets are dropped by the target host server 110X at this stage.

At operation 520, the VNP on host 230 inspects the packet 402, 404 to determine whether or not the packet 402, 404 is a proxy ping-type packet (e.g., via searching for the proxy ping flag 140 within the TCP header 136 of the packet 402, 404). With the example generic packet 404, the VNP on host 230 concludes that this is not a proxy ping-type packet, and thus the generic packet 404 is passed on to the target VM 502 at operation 522. With the example proxy ping packet 402, the VNP on host 230 intercepts the proxy ping packet 402 (e.g., does not send the packet 402 to the target VM 502) and instead sends the proxy ping packet 402 to the CM agent 106 for further processing.

At this stage, since the generic packet 404 has reached its intended destination, this example continues on with only proxy ping packet 402 and the subsequent operations taken by the host servers 110X, 110 when replying to this proxy ping packet 402 and when receiving that reply.

More specifically, at operation 530, the CM agent 106 generates a proxy ping response packet (or just "response packet") 330 and inserts that proxy ping response packet 330 into the packet processing pipeline 300 (e.g., as an egress packet). When creating the proxy ping response packet 330, the CM agent 106 reverses the source and target IP addresses and ports from the proxy ping packet 402 in the IP header 134 and TCP header 136, and also adds the proxy ping flag 140 into the TCP header 136 of this response packet 330.

Similar to the egress packets of FIG. 4 and the ingress packets described above for FIG. 5, the response packet 330 is then sent to the GFT 224 for insertion into the packet processing pipeline 300, similarly causing the ROE 222 to apply the simple rules 204 to the response packet 330 at operation 532, defer unresolved packets (including proxy ping packets 402) to the VNP on SOC 212 at operation 534 (if needed), apply the complex rules on the response packet 330 at operation 536, and pass off the allowed response packet 330 to GFT 224 for transmission at operation 538, thereby causing the GFT 224 to send the response packet 330 to the source host server 110 at operation 540.

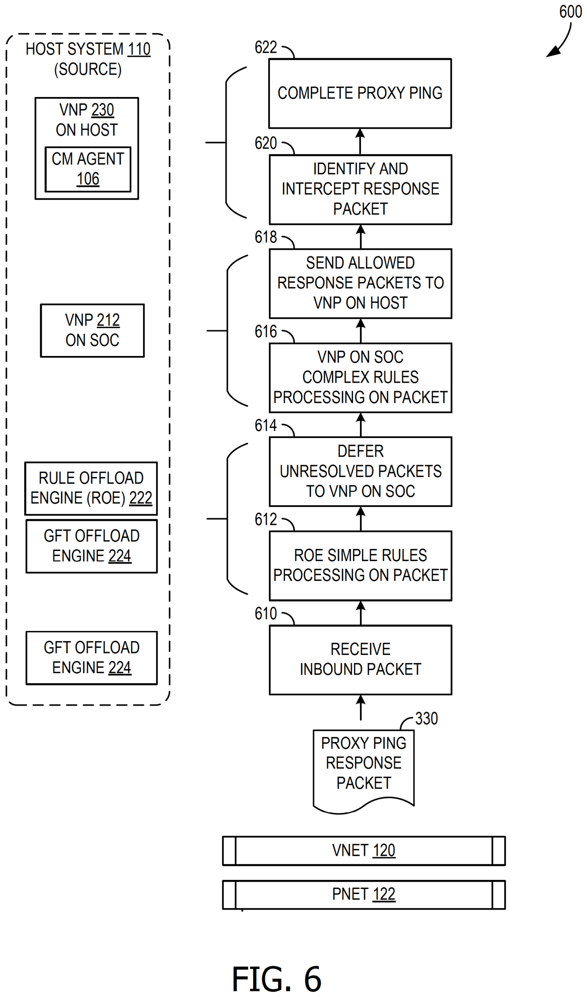

FIG. 6 is a flowchart 600 illustrating example operations for processing the example proxy ping response packet 330 during ingress back at the source host server 110. In the example, the GFT 224 on the source host server 110 receives the response packet 330 at operation 610. In some examples, while not shown in FIG. 6, the GFT 224 also performs an ROE determination 430 for the response packet 330 at this stage (e.g., as shown and described in FIG. 4). Similar to the ROE determination 430, packets 330 that do not have ROE enabled thus skip operations 612 and 614, instead passing directly as a deferral 320 to the VNP on SOC 212 at operation 616.

In cases where ROE is enabled for the source VM, the GFT 224 passes the response packet 330 to the ROE 222, thereby causing the ROE 222 to apply the simple rules 204 to the response packet 330 at operation 612. For response packets 330 that are not dispositively allowed or denied by the simple rules 204, the GFT 224 defers 320 the response packet 330 to the VNP on SOC 212 at operation 614 (e.g., similar to operation 436).

At operation 616, in the example, the VNP on SOC 212 applies the complex rules 202 (or the full SDN rules 160) to the response packet 330 (e.g., similar to operation 440). Each response packet 330 is either allowed or denied by application of the complex rules 202 at this stage. As such, allowed response packets 330 are passed to the VNP on host 230 for further processing at operation 618. In the case of denied packets 402, 404, while not shown in FIG. 5, such response packet 330 are dropped by the source host server 110 at this stage.

At operation 620, the VNP on host 230 inspects the response packet 330 to determine whether or not the response packet 330 is a proxy ping-type packet (e.g., via searching for the proxy ping flag 140 within the TCP header 136 of the packet 402, 404). With the example proxy ping response packet 330, the VNP on host 230 intercepts the proxy ping response packet 330 (e.g., does not send the packet 402 to the source VM) and instead sends the proxy ping packet 402 to the CM agent 106 for further processing.

At operation 622, upon receipt of the proxy ping response packet 330, the CM agent 106 completes the proxy ping. As discussed above, completion of the proxy ping can include, for example, capturing a receipt timestamp, calculating a time difference between the receipt timestamp and a sent timestamp, determining a latency time for the proxy ping, and the like. Any such data may be sent to the CM controller 104, a client device, or the like, who may subsequently use the completion of the proxy ping and its associated data for analysis. In some examples, the CM agent 106 times out a proxy ping that has not been responded to within a predefined period of time.

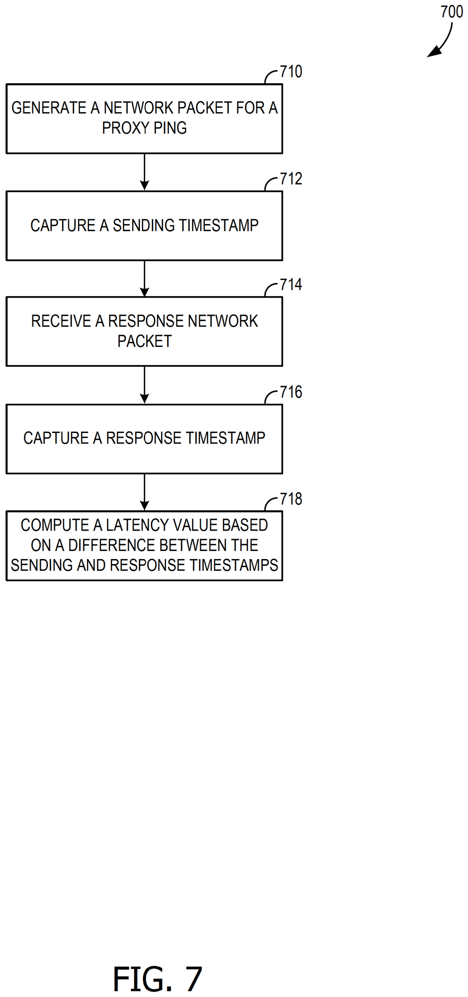

FIG. 7 is a flowchart 700 illustrating exemplary operations performed by the CM system 100 of FIG. 1 for evaluating network connectivity between computing resources within a computing environment. In examples, the operations are performed by the host server 110 shown in FIG. 1 and FIG. 2. At operation 710, the host server 110 (e.g., the CM agent 106) creates a network packet (e.g., vnet packet 130, original proxy ping packet 402) for a proxy ping at a first host server (e.g., host server 110) that provides a first virtual machine (VM) (e.g., VM1 112A), the network packet being originally created by the first host server and not created by the first VM, the network packet being created to include a proxy ping flag (e.g., proxy ping flag 140) within a header of the network packet (e.g., TCP header 136), the network packet identifying the first VM as a source for the network packet (e.g., via a virtual IP address of VM1 112A as the source address in the IP header 134) and a second VM (e.g., VM3 112C) as a destination for the network packet (e.g., via a virtual IP address of VM3 112C as the destination IP address in the IP header 134). At operation 712, the host server 110 (e.g., the CM agent 106) captures a sending timestamp indicating a time of a sending of the network packet.

At operation 714, in the example, the host server 110 receives a response network packet (e.g., proxy ping response packet 330) from a second host server (e.g., host server 110X) that hosts the second VM, the response network packet being generated by the second host server in response to receipt and interception of the network packet without the network packet being sent through to the second VM, the network packet having been identified for interception by the second host server based on identifying the proxy ping flag within the header of the network packet. At operation 716, the host server 110 captures a response timestamp indicating a time of the receiving of the response network packet. At operation 718, the host server 110 computes a latency value based on a difference between the sending timestamp and the response timestamp.

In some examples, the host server 110 also applies a plurality of rules (e.g., SDN rules 160, simple rules 204, complex rules 202) of a software defined network (e.g., vnet 120) to the network packet prior to sending the network packet to the second VM via the software defined network, the application of the plurality of rules allowing the network packet to be approved for the sending. In some examples, the host server 110 also applies a first subset of rules (e.g., simple rules 204) of the software defined network to the network packet, the first subset of rules being a subset of the plurality of rules, wherein application of the first subset of rules does not dispositively resolve whether the network packet is allowed or denied, defers the network packet (e.g., deferral 320) for further rules evaluation in response to the indisposition, and applies at least a second subset of rules (e.g., complex rules 202, SDN rules 160) of the software defined network to the network packet in response to the deferral, the second subset of rules being one or more additional rules from the plurality of rules, wherein application of at least the second subset of rules dispositively resolves that the network packet is allowed to be sent. In some examples, applying of at least the second subset of rules is performed by a system-on-chip (SOC) hardware component (e.g., VNP on SOC 212) of the first host server, wherein applying of the first subset of rules to the network packet and deferring of the network packet is performed by a field-programmable gate array (FPGA) hardware component (e.g., FPGA 220) of the first host server, the deferring being to the SOC hardware component.

In some examples, the second host server 110X, upon receipt of the network packet by the second host server 110X, inspects the network packet to identify the proxy ping flag within the header of the network packet, intercepts the network packet by the second host server 110X, thereby causing the network packet to not be sent to the second VM, and generates the response network packet by the second host server 110X, the response network packet identifying the second VM as a source for the response network packet and the first VM as a destination for the response network packet, the response network packet including the proxy ping flag within a header of the response network packet. In some examples, the second host server 110X also applies a second plurality of rules of a software defined network to the response network packet prior to sending the response network packet to the first host server via the software defined network, the application of the second plurality of rules allowing the response network packet to be approved for the sending of the response network packet.

In some examples, the network packet is a transmission control protocol (TCP) packet, wherein the proxy ping flag is included as a TCP option within a TCP header of the network packet.

### Additional Examples

An example connectivity management system for evaluating network connectivity between computing resources within a computing environment is provided. The connectivity management system comprises: a first processor; and a first computer-readable medium storing first instructions that are operative upon execution by the first processor to: generate a network packet for a proxy ping at a first computing resource hosting a first virtual computing resource, the network packet being originally created by the first computing resource and not created by the first virtual computing resource, the network packet being created to include a proxy ping flag within a header of the network packet, the network packet identifying the first virtual computing resource as a source for the network packet and a second virtual computing resource as a destination for the network packet; capture a sending timestamp indicating a time of a sending of the network packet; receive a response network packet from a second computing resource that hosts the second virtual computing resource, the response network packet being generated by the second computing resource in response to receipt and interception of the network packet without the network packet being sent to the second virtual computing resource, the network packet having been identified for interception by the second computing resource based on identifying the proxy ping flag within the header of the network packet; capture a response timestamp indicating a time of the receiving of the response network packet; and compute a latency value based on a difference between the sending timestamp and the response timestamp.

An example computer-implemented method for evaluating network connectivity between computing resources within a computing environment is provided. The method comprises: creating a network packet for a proxy ping at a first host server that provides a first virtual machine (VM), the network packet being originally created by the first host server and not created by the first VM, the network packet being created to include a proxy ping flag within a header of the network packet, the network packet identifying the first VM as a source for the network packet and a second VM as a destination for the network packet; capturing a sending timestamp indicating a time of a sending of the network packet; receiving a response network packet from a second host server that hosts the second VM, the response network packet being generated by the second host server in response to receipt and interception of the network packet without the network packet being sent through to the second VM, the network packet having been identified for interception by the second host server based on identifying the proxy ping flag within the header of the network packet; capturing a response timestamp indicating a time of the receiving of the response network packet; and computing a latency value based on a difference between the sending timestamp and the response timestamp.

An example computer storage device having computer-executable instructions stored thereon is provided. On execution by a computer, the instructions cause the computer to perform operations comprising: creating a network packet for a proxy ping at a first host server that provides a first virtual machine (VM), the network packet being originally created by the first host server and external to the first VM, the network packet being created to include a proxy ping flag within a header of the network packet, the network packet identifying the first VM as a source for the network packet and a second VM as a destination for the network packet; capturing a sending timestamp indicating a time of a sending of the network packet; receiving a response network packet from a second host server that hosts the second VM, the response network packet being generated by the second host server in response to receipt and interception of the network packet without the network packet being sent through to the second VM, the network packet having been identified for interception by the second host server based on identifying the proxy ping flag within the header of the network packet; capturing a response timestamp indicating a time of the receiving of the response network packet; and computing a latency value based on a difference between the sending timestamp and the response timestamp.

An example computing device for applying rules to network packets within a software defined network is provided. The computing device comprises: a first network acceleration component comprising a generic flow table (GFT) module and a rule offload engine (ROE) module, the GFT module being configured to pass a first network packet to the ROE module upon determination that the first network packet does not match an active flow in a flow-based hardware acceleration process performed by the GFT module, the ROE module being configured to determine that the first network packet is not dispositively allowed or denied upon applying a first set of rules of the software defined network to the first network packet; and a second network acceleration component configured to: receive a deferral for the first network packet based on the determination by the ROE module; apply a second set of rules of the software defined network to the first network packet; and transmit an allowance command to the GFT module for the first network packet, thereby causing the GFT module to transmit the first network packet within the software defined network.

An example network acceleration card is provided. The network acceleration card comprises: at least one network interface component configured to send and receive network packets via a bus of a computing device; and a field-programmable gate array (FPGA) module programmed to: perform flow-based evaluation of a first network packet by comparing one or more of a source address and a target address with entries in an active flows table; determine that the first network packet does not have an entry in the active flows table; apply a plurality of rules for a software defined network to the first network packet, the application resulting in the first network packet being neither allowed nor denied by the plurality of rules; and transmit the first network packet to another component of the computing device via the bus for further evaluation.

An example cloud computing infrastructure is provided. The cloud computing infrastructure comprises: a plurality of host servers, each host server of the plurality of host servers comprising: one or more central processors executing a host operating system that is configured to provide one or more virtual computing resources that communicate via a software defined network; and a first network acceleration card, the first network acceleration card including a field-programmable gate array programmed to: perform flow-based evaluation of a first network packet by comparing one or more of a source address and a target address with entries in an active flows table; determine that the first network packet does not have an entry in the active flows table; apply a plurality of rules for the software defined network to the first network packet, the application resulting in the first network packet being neither allowed nor denied by the plurality of rules; and transmit the first network packet to another component of a respective host server via an internal bus for further evaluation.

Alternatively, or in addition to the other examples described herein, examples include any combination of the following:
- generate a network packet for a proxy ping at a first computing resource hosting a first virtual computing resource;
- a network packet being originally created by the first computing resource and not created by the first virtual computing resource;
- a network packet being created to include a proxy ping flag within a header of the network packet;
- a network packet identifying the first virtual computing resource as a source for the network packet and a second virtual computing resource as a destination for the network packet;
- capture a sending timestamp indicating a time of a sending of the network packet;
- receive a response network packet from a second computing resource that hosts the second virtual computing resource;
- a response network packet being generated by the second computing resource in response to receipt and interception of the network packet without the network packet being sent to the second virtual computing resource;
- a network packet having been identified for interception by the second computing resource based on identifying the proxy ping flag within the header of the network packet;
- capture a response timestamp indicating a time of the receiving of the response network packet;
- compute a latency value based on a difference between the sending timestamp and the response timestamp;
- apply a plurality of rules of a software defined network to the network packet prior to sending the network packet to the second computing resource via the software defined network;
- application of the plurality of rules allowing the network packet to be approved for the sending;
- apply a first subset of rules of the software defined network to the network packet;
- the first subset of rules being a subset of the plurality of rules;
- application of the first subset of rules does not dispositively resolve whether the network packet is allowed or denied;
- defer the network packet for further rules evaluation in response to the indisposition;
- apply at least a second subset of rules of the software defined network to the network packet in response to the deferral;
- the second subset of rules being one or more additional rules from the plurality of rules;
- application of at least the second subset of rules dispositively resolves that the network packet is allowed to be sent;
- a system-on-chip (SOC) hardware component that is configured to perform the applying of at least the second subset of rules to the network packet in response to the deferral;
- a field-programmable gate array (FPGA) hardware component that is configured to:
- perform the applying of the first subset of rules to the network packet; and
- perform the deferring of the network packet, the deferring being to the SOC hardware component;
- the first processor and first computer-readable medium are part of the first computing resource;
- a second processor of the second computing resource;
- a second computer-readable medium of the second computing resource storing second instructions;
- upon receipt of the network packet by the second computing resource, inspect the network packet to identify the proxy ping flag within the header of the network packet;
- intercept the network packet, thereby causing the network packet to not be sent to the second virtual computing resource;
- generate the response network packet;
- a response network packet identifying the second virtual computing resource as a source for the response network packet and the first virtual computing resource as a destination for the response network packet;
- a response network packet including the proxy ping flag within a header of the response network packet;
- apply a second plurality of rules of a software defined network to the response network packet prior to sending the response network packet to the first computing resource via the software defined network;
- the application of the second plurality of rules allowing the response network packet to be approved for the sending of the response network packet;
- the network packet is a transmission control protocol (TCP) packet;
- the proxy ping flag is included as a TCP option within a TCP header of the network packet;
- creating a network packet for a proxy ping at a first host server that provides a first virtual machine (VM);
- a network packet being originally created by the first host server and not created by the first VM;
- a network packet being created to include a proxy ping flag within a header of the network packet;
- a network packet identifying the first VM as a source for the network packet and a second VM as a destination for the network packet;
- capturing a sending timestamp indicating a time of a sending of the network packet;
- receiving a response network packet from a second host server that hosts the second VM;
- a response network packet being generated by the second host server in response to receipt and interception of the network packet without the network packet being sent through to the second VM;
- a network packet having been identified for interception by the second host server based on identifying the proxy ping flag within the header of the network packet;
- capturing a response timestamp indicating a time of the receiving of the response network packet;
- computing a latency value based on a difference between the sending timestamp and the response timestamp;
- applying a plurality of rules of a software defined network to the network packet prior to sending the network packet to the second VM via the software defined network, the application of the plurality of rules allowing the network packet to be approved for the sending;
- applying a first subset of rules of the software defined network to the network packet;
- the first subset of rules being a subset of the plurality of rules;
- application of the first subset of rules does not dispositively resolve whether the network packet is allowed or denied;
- deferring the network packet for further rules evaluation in response to the indisposition;
- applying at least a second subset of rules of the software defined network to the network packet in response to the deferral;
- a second subset of rules being one or more additional rules from the plurality of rules;
- application of at least the second subset of rules dispositively resolves that the network packet is allowed to be sent;
- applying of at least the second subset of rules is performed by a system-on-chip (SOC) hardware component of the first host server;
- applying of the first subset of rules to the network packet and deferring of the network packet is performed by a field-programmable gate array (FPGA) hardware component of the first host server;
- deferring being to the SOC hardware component;
- upon receipt of the network packet by the second host server, inspect the network packet to identify the proxy ping flag within the header of the network packet;
- intercepting the network packet by the second host server, thereby causing the network packet to not be sent to the second VM;
- generating the response network packet by the second host server;
- the response network packet identifying the second VM as a source for the response network packet and the first VM as a destination for the response network packet;
- the response network packet including the proxy ping flag within a header of the response network packet;
- applying a second plurality of rules of a software defined network to the response network packet prior to sending the response network packet to the first host server via the software defined network;
- the application of the second plurality of rules allowing the response network packet to be approved for the sending of the response network packet;
- the network packet is a transmission control protocol (TCP) packet, the proxy ping flag is included as a TCP option within a TCP header of the network packet;
- a first network acceleration component comprising a generic flow table (GFT) module and a rule offload engine (ROE) module;
- a GFT module being configured to pass a first network packet to the ROE module upon determination that the first network packet does not match an active flow in a flow-based hardware acceleration process performed by the GFT module;
- an ROE module being configured to determine that the first network packet is not dispositively allowed or denied upon applying a first set of rules of the software defined network to the first network packet;
- a second network acceleration component configured to receive a deferral for the first network packet based on the determination by the ROE module;
- a second network acceleration component configured to apply a second set of rules of the software defined network to the first network packet;
- transmit an allowance command to the GFT module for the first network packet, thereby causing the GFT module to transmit the first network packet within the software defined network;
- execute a host operating system and a hypervisor that provides and manages at least one virtual computing resource and that provides network packet processing for the software defined network for network packets passing into and out of the at least one virtual computing resource;
- a hypervisor is configured to pass the first network packet from a first virtual computing resource of the at least one virtual computing resources to the GFT module for transmission on the software defined network;
- first and second network acceleration components are distinct from the processor executing the host operating system;
- select the first set of rules from a plurality of rules based on a predefined rule type;
- configure the ROE module with the first set of rules;
- a predefined rule type is one of: (i) an access control list rule that one of allows and denies packets; (ii) an encapsulation or decapsulation rule; (iii) a mapping rule; (iv) a transformation rule; and (v) a transposition rule;
- select the second set of rules by excluding the first set of rules from the plurality of rules;
- configure the second network acceleration component with the first set of rules;
- identify a proxy ping flag within a packet header of a second network packet;
- pass the second network packet to the ROE module upon identification of the proxy ping flag in the second network packet;
- the first network packet is an ingress packet addressed to an address of a virtual computing resource hosted by the computing device;
- intercept the first network packet based on identification of a proxy ping flag within a packet header of the first network packet, thereby causing the first network packet to not be sent to the virtual computing resource;
- generate a response network packet in response to the interception;
- a response network packet identifying the virtual computing resource as a source for the response network packet and another computing resource as a destination for the response network packet;
- a response network packet including the proxy ping flag within a header of the response network packet;
- a first network acceleration component is a field-programmable gate array (FPGA);
- a second network acceleration component is a system-on-chip (SOC) component;
- a processor is a central processing unit (CPU) of the computing device;
- at least one network interface component configured to send and receive network packets via a bus of a computing device;
- a field-programmable gate array (FPGA) module programmed to perform flow-based evaluation of a first network packet by comparing one or more of a source address and a target address with entries in an active flows table;
- a field-programmable gate array (FPGA) module programmed to determine that the first network packet does not have an entry in the active flows table;
- a field-programmable gate array (FPGA) module programmed to apply a plurality of rules for a software defined network to the first network packet, the application resulting in the first network packet being neither allowed nor denied by the plurality of rules; and
- a field-programmable gate array (FPGA) module programmed to transmit the first network packet to another component of the computing device via the bus for further evaluation;
- receive, from the other component, a message indicating that the first network packet is allowed;
- sending the first network packet in response to the allowance;
- receive the plurality of rules from another component of the computing device via the bus;
- configure the FPGA module with the plurality of rules, thereby enabling the FPGA module to apply the plurality of rules to network packets;
- inspect a packet header of a second network packet for a proxy ping flag;
- upon detection of the proxy ping flag within the second network packet, apply the plurality of rules for the software defined network to the second network packet regardless of whether the second network packet matches an entry in the active flows table;
- the packet header of the second packet is a transmission control protocol (TCP) header;
- the proxy ping flag is included as a TCP option within the TCP header;
- the other component of the computing device is a system-on-chip (SOC) hardware acceleration component that is configured to apply additional rules to the first network packet;
- the SOC hardware acceleration component is coupled in communication with the network acceleration card via the bus;
- the plurality of rules are a subset of software defined networking (SDN) rules that are active on the computing device;
- the additional rules applied by the SOC hardware acceleration component include at least one additional rule of the SDN rules;
- apply the plurality of rules to a second network packet;
- the application resulting in the first network packet being one of allowed and denied by the plurality of rules;
- transmit the second network packet to another computing device when the second network packet is allowed and dropping the second network packet when the second network packet is denied;
- a plurality of host servers, each host server of the plurality of host servers comprising:
- one or more central processors executing a host operating system that is configured to provide one or more virtual computing resources that communicate via a software defined network; and a first network acceleration card;
- perform flow-based evaluation of a first network packet by comparing one or more of a source address and a target address with entries in an active flows table;
- determine that the first network packet does not have an entry in the active flows table;
- apply a plurality of rules for the software defined network to the first network packet, the application resulting in the first network packet being neither allowed nor denied by the plurality of rules;
- transmit the first network packet to another component of a respective host server via an internal bus for further evaluation;
- each host server of the plurality of host servers further comprises a second network acceleration card, the second network acceleration card being the other component;
- a second network acceleration card being configured to apply additional rules to the first network packet;
- receive, from the other component, a message indicating that the first network packet is allowed;
- cause the first network packet to be sent out a physical network in response to the allowance;
- inspect a packet header of a second network packet for a proxy ping flag; and
- upon detection of the proxy ping flag within the second network packet, apply the plurality of rules for the software defined network to the second network packet regardless of whether the second network packet matches an entry in the active flows table.

While the aspects of the disclosure have been described in terms of various examples with their associated operations, a person skilled in the art would appreciate that a combination of operations from any number of different examples is also within scope of the aspects of the disclosure.

### Example Operating Environment

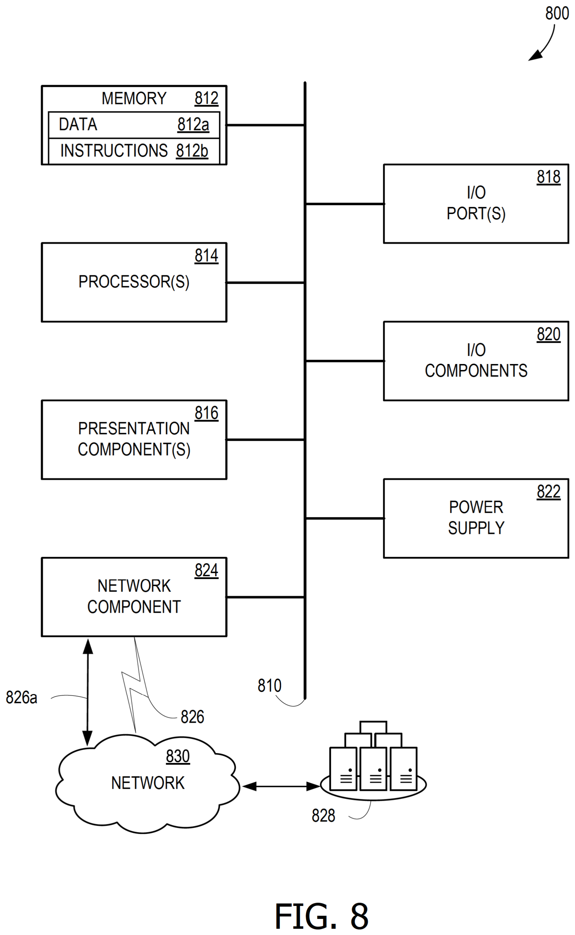

FIG. 8 is a block diagram of an example computing device 800 (e.g., a computer storage device) for implementing aspects disclosed herein and is designated generally as computing device 800. In some examples, one or more computing devices 800 are provided for an on-premises computing solution. In some examples, one or more computing devices 800 are provided as a cloud computing solution. In some examples, a combination of on-premises and cloud computing solutions are used. Computing device 800 is but one example of a suitable computing environment and is not intended to suggest any limitation as to the scope of use or functionality of the examples disclosed herein, whether used singly or as part of a larger set. Neither should computing device 800 be interpreted as having any dependency or requirement relating to any one or combination of components/modules illustrated.

The examples disclosed herein may be described in the general context of computer code or machine-useable instructions, including computer-executable instructions such as program components, being executed by a computer or other machine, such as a personal data assistant or other handheld device. Generally, program components including routines, programs, objects, components, data structures, and the like, refer to code that performs particular tasks, or implement particular abstract data types. The disclosed examples may be practiced in a variety of system configurations, including personal computers, laptops, smart phones, mobile tablets, hand-held devices, consumer electronics, specialty computing devices, etc. The disclosed examples may also be practiced in distributed computing environments when tasks are performed by remote-processing devices that are linked through a communications network.

Computing device 800 includes a bus 810 that directly or indirectly couples the following devices: computer storage memory 812, one or more processors 814, one or more presentation components 816, input/output (I/O) ports 818, I/O components 820, a power supply 822, and a network component 824. While computing device 800 is depicted as a seemingly single device, multiple computing devices 800 may work together and share the depicted device resources. For example, memory 812 may be distributed across multiple devices, and processor(s) 814 may be housed with different devices.

Bus 810 represents what may be one or more busses (such as an address bus, data bus, or a combination thereof). Although the various blocks of FIG. 8 are shown with lines for the sake of clarity, delineating various components may be accomplished with alternative representations. For example, a presentation component such as a display device is an I/O component in some examples, and some examples of processors have their own memory. Distinction is not made between such categories as "workstation," "server," "laptop," "hand-held device," etc., as all are contemplated within the scope of FIG. 8 and the references herein to a "computing device." Memory 812 may take the form of the computer storage media referenced below and operatively provide storage of computer-readable instructions, data structures, program modules and other data for the computing device 800. In some examples, memory 812 stores one or more of an operating system, a universal application platform, or other program modules and program data. Memory 812 is thus able to store and access data 812a and instructions 812b that are executable by processor 814 and configured to carry out the various operations disclosed herein.

In some examples, memory 812 includes computer storage media. Memory 812 may include any quantity of memory associated with or accessible by the computing device 800. Memory 812 may be internal to the computing device 800 (as shown in FIG. 8), external to the computing device 800 (not shown), or both (not shown). Additionally, or alternatively, the memory 812 may be distributed across multiple computing devices 800, for example, in a virtualized environment in which instruction processing is carried out on multiple computing devices 800. For the purposes of this disclosure, "computer storage media," "computer-storage memory," "memory," and "memory devices" are synonymous terms for the computer-storage memory 812, and none of these terms include carrier waves or propagating signaling.

Processor(s) 814 may include any quantity of processing units that read data from various entities, such as memory 812 or I/O components 820. Specifically, processor(s) 814 are programmed to execute computer-executable instructions for implementing aspects of the disclosure. The instructions may be performed by the processor, by multiple processors within the computing device 800, or by a processor external to the client computing device 800. In some examples, the processor(s) 814 are programmed to execute instructions such as those illustrated in the flow charts discussed below and depicted in the accompanying drawings. Moreover, in some examples, the processor(s) 814 represent an implementation of analog techniques to perform the operations described herein. For example, the operations may be performed by an analog client computing device 800 and/or a digital client computing device 800. Presentation component(s) 816 present data indications to a user or other device. Exemplary presentation components include a display device, speaker, printing component, vibrating component, etc. One skilled in the art will understand and appreciate that computer data may be presented in a number of ways, such as visually in a graphical user interface (GUI), audibly through speakers, wirelessly between computing devices 800, across a wired connection, or in other ways. I/O ports 818 allow computing device 800 to be logically coupled to other devices including I/O components 820, some of which may be built in. Example I/O components 820 include, for example but without limitation, a microphone, joystick, game pad, satellite dish, scanner, printer, wireless device, etc.

Computing device 800 may operate in a networked environment via the network component 824 using logical connections to one or more remote computers. In some examples, the network component 824 includes a network interface card and/or computer-executable instructions (e.g., a driver) for operating the network interface card. Communication between the computing device 800 and other devices may occur using any protocol or mechanism over any wired or wireless connection. In some examples, network component 824 is operable to communicate data over public, private, or hybrid (public and private) using a transfer protocol, between devices wirelessly using short range communication technologies (e.g., near-field communication (NFC), Bluetooth^{™} branded communications, or the like), or a combination thereof. Network component 824 communicates over wireless communication link 826 and/or a wired communication link 826a to a remote resource 828 (e.g., a cloud resource) across network 830. Various different examples of communication links 826 and 826a include a wireless connection, a wired connection, and/or a dedicated link, and in some examples, at least a portion is routed through the internet.

Although described in connection with an example computing device 800, examples of the disclosure are capable of implementation with numerous other general-purpose or special-purpose computing system environments, configurations, or devices. Examples of well-known computing systems, environments, and/or configurations that may be suitable for use with aspects of the disclosure include, but are not limited to, smart phones, mobile tablets, mobile computing devices, personal computers, server computers, hand-held or laptop devices, multiprocessor systems, gaming consoles, microprocessor-based systems, set top boxes, programmable consumer electronics, mobile telephones, mobile computing and/or communication devices in wearable or accessory form factors (e.g., watches, glasses, headsets, or earphones), network PCs, minicomputers, mainframe computers, distributed computing environments that include any of the above systems or devices, virtual reality (VR) devices, augmented reality (AR) devices, mixed reality devices, holographic device, and the like. Such systems or devices may accept input from the user in any way, including from input devices such as a keyboard or pointing device, via gesture input, proximity input (such as by hovering), and/or via voice input.

Examples of the disclosure may be described in the general context of computer-executable instructions, such as program modules, executed by one or more computers or other devices in software, firmware, hardware, or a combination thereof. The computer-executable instructions may be organized into one or more computer-executable components or modules. Generally, program modules include, but are not limited to, routines, programs, objects, components, and data structures that perform particular tasks or implement particular abstract data types. Aspects of the disclosure may be implemented with any number and organization of such components or modules. For example, aspects of the disclosure are not limited to the specific computer-executable instructions or the specific components or modules illustrated in the figures and described herein. Other examples of the disclosure may include different computer-executable instructions or components having more or less functionality than illustrated and described herein. In examples involving a general-purpose computer, aspects of the disclosure transform the general-purpose computer into a special-purpose computing device when configured to execute the instructions described herein.

By way of example and not limitation, computer readable media comprise computer storage media and communication media. Computer storage media include volatile and nonvolatile, removable and non-removable memory implemented in any method or technology for storage of information such as computer readable instructions, data structures, program modules, or the like. Computer storage media are tangible and mutually exclusive to communication media. Computer storage media are implemented in hardware and exclude carrier waves and propagated signals. Computer storage media for purposes of this disclosure are not signals. Exemplary computer storage media include hard disks, flash drives, solid-state memory, phase change random-access memory (PRAM), static random-access memory (SRAM), dynamic random-access memory (DRAM), other types of random-access memory (RAM), read-only memory (ROM), electrically erasable programmable read-only memory (EEPROM), flash memory or other memory technology, compact disk read-only memory (CD-ROM), digital versatile disks (DVD) or other optical storage, magnetic cassettes, magnetic tape, magnetic disk storage or other magnetic storage devices, or any other non-transmission medium that may be used to store information for access by a computing device. In contrast, communication media typically embody computer readable instructions, data structures, program modules, or the like in a modulated data signal such as a carrier wave or other transport mechanism and include any information delivery media.

The order of execution or performance of the operations in examples of the disclosure illustrated and described herein is not essential, and may be performed in different sequential manners in various examples. For example, it is contemplated that executing or performing a particular operation before, contemporaneously with, or after another operation is within the scope of aspects of the disclosure. When introducing elements of aspects of the disclosure or the examples thereof, the articles "a," "an," "the," and "said" are intended to mean that there are one or more of the elements. The terms "comprising," "including," and "having" are intended to be inclusive and mean that there may be additional elements other than the listed elements. The term "exemplary" is intended to mean "an example of." The phrase "one or more of the following: A, B, and C" means "at least one of A and/or at least one of B and/or at least one of C."

Having described aspects of the disclosure in detail, it will be apparent that modifications and variations are possible without departing from the scope of aspects of the disclosure as defined in the appended claims. As various changes could be made in the above constructions, products, and methods without departing from the scope of aspects of the disclosure, it is intended that all matter contained in the above description and shown in the accompanying drawings shall be interpreted as illustrative and not in a limiting sense.
**The following is a list of further preferred embodiments of the invention:**
Embodiment 1. A connectivity management system for evaluating network connectivity between computing resources within a computing environment, the connectivity management system comprising:
   a first processor; and
   a first computer-readable medium storing first instructions that are operative upon execution by the first processor to:
      generate a first network packet for a proxy ping at a first computing resource hosting a first virtual computing resource, the first network packet being originally generated by the first computing resource, the first network packet including a proxy ping flag within a header of the first network packet, the first network packet identifying the first virtual computing resource as a source for the first network packet and a second virtual computing resource as a destination for the first network packet;
      capture a sending timestamp indicating a time of a sending of the first network packet;
      receive a response network packet from a second computing resource that hosts the second virtual computing resource, the response network packet being generated by the second computing resource in response to receipt and interception of the first network packet without the first network packet being sent to the second virtual computing resource, the first network packet having been identified for interception by the second computing resource based on identifying the proxy ping flag within the header of the first network packet;
      capture a response timestamp indicating a time of the receiving of the response network packet; and
      compute a latency value based on a difference between the sending timestamp and the response timestamp.
Embodiment 2. The connectivity management system of embodiment 1, wherein the first instructions are further operative to apply a plurality of rules of a software defined network to the first network packet prior to sending the first network packet to the second computing resource via the software defined network, the application of the plurality of rules allowing the first network packet to be approved for the sending of the first network packet to the second computing resource.
Embodiment 3. The connectivity management system of embodiment 2, wherein the first instructions are further operative to:
   apply a first subset of rules of the software defined network to the first network packet, the first subset of rules being a subset of the plurality of rules, wherein application of the first subset of rules includes determining that the first subset of rules does not dispositively resolve whether the first network packet is allowed or denied; and
   apply at least a second subset of rules of the software defined network to the first network packet in response to the indisposition, the second subset of rules being one or more additional rules from the plurality of rules, wherein application of at least the second subset of rules dispositively resolves that the first network packet is allowed to be sent.
Embodiment 4. The connectivity management system of embodiment 3, further comprising:
   a system-on-chip (SOC) hardware component that is configured to perform the applying of at least the second subset of rules to the first network packet in response to the indisposition; and
   a field-programmable gate array (FPGA) hardware component that is configured to:
      perform the applying of the first subset of rules to the first network packet; and
      transmit the first network packet to the SOC hardware component.
Embodiment 5. The connectivity management system of embodiment 1, wherein the first processor and first computer-readable medium are part of the first computing resource, the connectivity management system further comprising:
   a second processor of the second computing resource; and
   a second computer-readable medium of the second computing resource storing second instructions that are operative upon execution by the second processor to:
      upon receipt of the first network packet by the second computing resource, inspect the first network packet to identify the proxy ping flag within the header of the first network packet;
      intercept the first network packet, thereby causing the first network packet to not be sent to the second virtual computing resource; and
      generate the response network packet, the response network packet identifying the second virtual computing resource as a source for the response network packet and the first virtual computing resource as a destination for the response network packet, the response network packet including the proxy ping flag within a header of the response network packet.
Embodiment 6. The connectivity management system of embodiment 5, wherein the second instructions are further operative to:
   apply a plurality of rules of a software defined network to the response network packet prior to sending the response network packet to the first computing resource via the software defined network, the application of the plurality of rules allowing the response network packet to be approved for the sending of the response network packet.
Embodiment 7. The connectivity management system of embodiment 1, wherein the first network packet is a transmission control protocol (TCP) packet, wherein the proxy ping flag is included as a TCP option within a TCP header of the first network packet, wherein the first instructions are further operative to cause the latency value to be displayed as a connectivity status between the first virtual computing resource and the second virtual computing resource in a graphical user interface.
Embodiment 8. A computer-implemented method for evaluating network connectivity between computing resources within a computing environment, the method comprising:
   generating an original network packet for a proxy ping at a first host server that provides a first virtual machine (VM), the original network packet being originally generated by the first host server and not generated by the first VM, the original network packet including a proxy ping flag within a header of the original network packet, the original network packet identifying the first VM as a source for the original network packet and a second VM as a destination for the original network packet;
   capturing a sending timestamp indicating a time of a sending of the original network packet;
   receiving a response network packet from a second host server that hosts the second VM, the response network packet being generated by the second host server in response to receipt and interception of the original network packet without the original network packet being sent through to the second VM, the original network packet having been identified for interception by the second host server based on identifying the proxy ping flag within the header of the original network packet;
   capturing a response timestamp indicating a time of the receiving of the response network packet; and
   computing a latency value based on a difference between the sending timestamp and the response timestamp.
Embodiment 9. The method of embodiment 8, further comprising applying a plurality of rules of a software defined network to the original network packet prior to sending the original network packet to the second VM via the software defined network, the application of the plurality of rules allowing the original network packet to be approved for the sending.
Embodiment 10. The method of embodiment 9, further comprising:
   applying a first subset of rules of the software defined network to the original network packet, the first subset of rules being a subset of the plurality of rules, wherein application of the first subset of rules does not dispositively resolve whether the original network packet is allowed or denied; and
   applying at least a second subset of rules of the software defined network to the original network packet in response to the indisposition, the second subset of rules being one or more additional rules from the plurality of rules, wherein application of at least the second subset of rules dispositively resolves that the original network packet is allowed to be sent.
Embodiment 11. The method of embodiment 10, wherein the applying of at least the second subset of rules is performed by a system-on-chip (SOC) hardware component of the first host server, wherein applying of the first subset of rules to the original network packet is performed by a field-programmable gate array (FPGA) hardware component of the first host server.
Embodiment 12. The method of embodiment 8, further comprising:
   upon receipt of the original network packet by the second host server, inspecting the original network packet to identify the proxy ping flag within the header of the original network packet;
   intercepting the original network packet by the second host server, thereby causing the original network packet to not be sent to the second VM; and
   generating the response network packet by the second host server, the response network packet identifying the second VM as a source for the response network packet and the first VM as a destination for the response network packet, the response network packet including the proxy ping flag within a header of the response network packet.
Embodiment 13. The method of embodiment 12, further comprising:
   applying a second plurality of rules of a software defined network to the response network packet prior to sending the response network packet to the first host server via the software defined network, the application of the second plurality of rules allowing the response network packet to be approved for the sending of the response network packet.
Embodiment 14. The method of embodiment 8, wherein the original network packet is a transmission control protocol (TCP) packet, wherein the proxy ping flag is included as a TCP option within a TCP header of the original network packet.
Embodiment 15. A computer storage device having computer-executable instructions stored thereon, which, on execution by a computer, cause the computer to perform operations comprising:
   generating a first network packet for a proxy ping at a first host server that provides a first virtual machine (VM), the first network packet being originally generated by the first host server and external to the first VM, the first network packet including a proxy ping flag within a header of the first network packet, the first network packet identifying the first VM as a source for the first network packet and a second VM as a destination for the first network packet;
   capturing a sending timestamp indicating a time of a sending of the first network packet;
   receiving a response network packet from a second host server that hosts the second VM, the response network packet being generated by the second host server in response to receipt and interception of the first network packet without the first network packet being sent through to the second VM, the first network packet having been identified for interception by the second host server based on identifying the proxy ping flag within the header of the first network packet;
   capturing a response timestamp indicating a time of the receiving of the response network packet; and
   computing a latency value based on a difference between the sending timestamp and the response timestamp.
Embodiment 16. The computer storage device of embodiment 15, the operations further comprising applying a plurality of rules of a software defined network to the first network packet prior to sending the first network packet to the second VM via the software defined network, the application of the plurality of rules allowing the first network packet to be approved for the sending.
Embodiment 17. The computer storage device of embodiment 16, the operations further comprising:
   applying a first subset of rules of the software defined network to the first network packet, the first subset of rules being a subset of the plurality of rules, wherein application of the first subset of rules does not dispositively resolve whether the first network packet is allowed or denied;
   deferring the first network packet for further rules evaluation in response to the indisposition; and
   applying at least a second subset of rules of the software defined network to the first network packet in response to the deferral, the second subset of rules being one or more additional rules from the plurality of rules, wherein application of at least the second subset of rules dispositively resolves that the first network packet is allowed to be sent.
Embodiment 18. The computer storage device of embodiment 17, wherein applying of at least the second subset of rules is performed by a system-on-chip (SOC) hardware component of the first host server, wherein applying of the first subset of rules to the first network packet and deferring of the first network packet is performed by a field-programmable gate array (FPGA) hardware component of the first host server, the deferring being to the SOC hardware component.
Embodiment 19. The computer storage device of embodiment 15, the operations further comprising:
   upon receipt of the first network packet by the second host server, inspect the first network packet to identify the proxy ping flag within the header of the first network packet;
   intercepting the first network packet by the second host server, thereby causing the first network packet to not be sent to the second VM; and
   generating the response network packet by the second host server, the response network packet identifying the second VM as a source for the response network packet and the first VM as a destination for the response network packet, the response network packet including the proxy ping flag within a header of the response network packet.
Embodiment 20. The computer storage device of embodiment 19, the operations further comprising:
   applying a second plurality of rules of a software defined network to the response network packet prior to sending the response network packet to the first host server via the software defined network, the application of the second plurality of rules allowing the response network packet to be approved for the sending of the response network packet.

## Claims

1. A connectivity management system for evaluating network connectivity between computing resources within a computing environment, the connectivity management system comprising:
a first processor; and
a first computer-readable medium storing first instructions that are operative upon execution by the first processor to:
generate a first network packet for a proxy ping at a first computing resource hosting a first virtual computing resource, the first network packet being originally generated by the first computing resource, the first network packet including a proxy ping flag within a header of the first network packet, the first network packet identifying the first virtual computing resource as a source for the first network packet and a second virtual computing resource as a destination for the first network packet;
capture a sending timestamp indicating a time of a sending of the first network packet;
receive a response network packet from a second computing resource that hosts the second virtual computing resource, the response network packet being generated by the second computing resource in response to receipt and interception of the first network packet without the first network packet being sent to the second virtual computing resource, the first network packet having been identified for interception by the second computing resource based on identifying the proxy ping flag within the header of the first network packet;
capture a response timestamp indicating a time of the receiving of the response network packet; and
compute a latency value based on a difference between the sending timestamp and the response timestamp.

2. The connectivity management system of claim 1, wherein the first instructions are further operative to apply a plurality of rules of a software defined network to the first network packet prior to sending the first network packet to the second computing resource via the software defined network, the application of the plurality of rules allowing the first network packet to be approved for the sending of the first network packet to the second computing resource.

3. The connectivity management system of claim 2, wherein the first instructions are further operative to:
apply a first subset of rules of the software defined network to the first network packet, the first subset of rules being a subset of the plurality of rules, wherein application of the first subset of rules includes determining that the first subset of rules does not dispositively resolve whether the first network packet is allowed or denied; and
apply at least a second subset of rules of the software defined network to the first network packet in response to the indisposition, the second subset of rules being one or more additional rules from the plurality of rules, wherein application of at least the second subset of rules dispositively resolves that the first network packet is allowed to be sent,
preferably further comprising:
a system-on-chip (SOC) hardware component that is configured to perform the applying of at least the second subset of rules to the first network packet in response to the indisposition; and
a field-programmable gate array (FPGA) hardware component that is configured to:
perform the applying of the first subset of rules to the first network packet; and
transmit the first network packet to the SOC hardware component.

4. The connectivity management system of one of claims 1 to 3, wherein the first processor and first computer-readable medium are part of the first computing resource, the connectivity management system further comprising:
a second processor of the second computing resource; and
a second computer-readable medium of the second computing resource storing second instructions that are operative upon execution by the second processor to:
upon receipt of the first network packet by the second computing resource, inspect the first network packet to identify the proxy ping flag within the header of the first network packet;
intercept the first network packet, thereby causing the first network packet to not be sent to the second virtual computing resource; and
generate the response network packet, the response network packet identifying the second virtual computing resource as a source for the response network packet and the first virtual computing resource as a destination for the response network packet, the response network packet including the proxy ping flag within a header of the response network packet,
wherein the second instructions preferably are further operative to:
apply a plurality of rules of a software defined network to the response network packet prior to sending the response network packet to the first computing resource via the software defined network, the application of the plurality of rules allowing the response network packet to be approved for the sending of the response network packet.

5. The connectivity management system of one of claims 1 to 4, wherein the first network packet is a transmission control protocol (TCP) packet, wherein the proxy ping flag is included as a TCP option within a TCP header of the first network packet, wherein the first instructions are further operative to cause the latency value to be displayed as a connectivity status between the first virtual computing resource and the second virtual computing resource in a graphical user interface.

6. A computer-implemented method for evaluating network connectivity between computing resources within a computing environment, the method comprising:
generating an original network packet for a proxy ping at a first host server that provides a first virtual machine (VM), the original network packet being originally generated by the first host server and not generated by the first VM, the original network packet including a proxy ping flag within a header of the original network packet, the original network packet identifying the first VM as a source for the original network packet and a second VM as a destination for the original network packet;
capturing a sending timestamp indicating a time of a sending of the original network packet;
receiving a response network packet from a second host server that hosts the second VM, the response network packet being generated by the second host server in response to receipt and interception of the original network packet without the original network packet being sent through to the second VM, the original network packet having been identified for interception by the second host server based on identifying the proxy ping flag within the header of the original network packet;
capturing a response timestamp indicating a time of the receiving of the response network packet; and
computing a latency value based on a difference between the sending timestamp and the response timestamp.

7. The method of claim 6, further comprising applying a plurality of rules of a software defined network to the original network packet prior to sending the original network packet to the second VM via the software defined network, the application of the plurality of rules allowing the original network packet to be approved for the sending.

8. The method of claim 7, further comprising:
applying a first subset of rules of the software defined network to the original network packet, the first subset of rules being a subset of the plurality of rules, wherein application of the first subset of rules does not dispositively resolve whether the original network packet is allowed or denied; and
applying at least a second subset of rules of the software defined network to the original network packet in response to the indisposition, the second subset of rules being one or more additional rules from the plurality of rules, wherein application of at least the second subset of rules dispositively resolves that the original network packet is allowed to be sent.

9. The method of claim 8, wherein the applying of at least the second subset of rules is performed by a system-on-chip (SOC) hardware component of the first host server, wherein applying of the first subset of rules to the original network packet is performed by a field-programmable gate array (FPGA) hardware component of the first host server.

10. The method of one of claims 6 to 9, further comprising:
upon receipt of the original network packet by the second host server, inspecting the original network packet to identify the proxy ping flag within the header of the original network packet;
intercepting the original network packet by the second host server, thereby causing the original network packet to not be sent to the second VM; and
generating the response network packet by the second host server, the response network packet identifying the second VM as a source for the response network packet and the first VM as a destination for the response network packet, the response network packet including the proxy ping flag within a header of the response network packet,
preferably further comprising:
applying a second plurality of rules of a software defined network to the response network packet prior to sending the response network packet to the first host server via the software defined network, the application of the second plurality of rules allowing the response network packet to be approved for the sending of the response network packet.

11. The method of one of claims 6 to 10, wherein the original network packet is a transmission control protocol (TCP) packet, wherein the proxy ping flag is included as a TCP option within a TCP header of the original network packet.

12. A computer storage device having computer-executable instructions stored thereon, which, on execution by a computer, cause the computer to perform operations comprising:
generating a first network packet for a proxy ping at a first host server that provides a first virtual machine (VM), the first network packet being originally generated by the first host server and external to the first VM, the first network packet including a proxy ping flag within a header of the first network packet, the first network packet identifying the first VM as a source for the first network packet and a second VM as a destination for the first network packet;
capturing a sending timestamp indicating a time of a sending of the first network packet;
receiving a response network packet from a second host server that hosts the second VM, the response network packet being generated by the second host server in response to receipt and interception of the first network packet without the first network packet being sent through to the second VM, the first network packet having been identified for interception by the second host server based on identifying the proxy ping flag within the header of the first network packet;
capturing a response timestamp indicating a time of the receiving of the response network packet; and
computing a latency value based on a difference between the sending timestamp and the response timestamp.

13. The computer storage device of claim 12, the operations further comprising applying a plurality of rules of a software defined network to the first network packet prior to sending the first network packet to the second VM via the software defined network, the application of the plurality of rules allowing the first network packet to be approved for the sending.

14. The computer storage device of claim 13, the operations further comprising:
applying a first subset of rules of the software defined network to the first network packet, the first subset of rules being a subset of the plurality of rules, wherein application of the first subset of rules does not dispositively resolve whether the first network packet is allowed or denied;
deferring the first network packet for further rules evaluation in response to the indisposition; and
applying at least a second subset of rules of the software defined network to the first network packet in response to the deferral, the second subset of rules being one or more additional rules from the plurality of rules, wherein application of at least the second subset of rules dispositively resolves that the first network packet is allowed to be sent,
preferably wherein applying of at least the second subset of rules is performed by a system-on-chip (SOC) hardware component of the first host server, wherein applying of the first subset of rules to the first network packet and deferring of the first network packet is performed by a field-programmable gate array (FPGA) hardware component of the first host server, the deferring being to the SOC hardware component.

15. The computer storage device of one of claims 12 to 14, the operations further comprising:
upon receipt of the first network packet by the second host server, inspect the first network packet to identify the proxy ping flag within the header of the first network packet;
intercepting the first network packet by the second host server, thereby causing the first network packet to not be sent to the second VM; and
generating the response network packet by the second host server, the response network packet identifying the second VM as a source for the response network packet and the first VM as a destination for the response network packet, the response network packet including the proxy ping flag within a header of the response network packet,
the operations preferably further comprising:
applying a second plurality of rules of a software defined network to the response network packet prior to sending the response network packet to the first host server via the software defined network, the application of the second plurality of rules allowing the response network packet to be approved for the sending of the response network packet.
